# EUROPEAN PATENT SPECIFICATION

(11) **EP 4 079 008 B1**
(45) Date of publication and mention of the grant of the patent: **15.10.2025**
(21) Application number: 19956995.5
(22) Date of filing: 17.12.2019
(51) Int. Cl.: H04W 8/24, H04W 4/70

(54) **WIRELESS DEVICE, NETWORK NODE, AND METHODS PERFORMED THEREBY FOR HANDLING CONFIGURATION OF THE WIRELESS DEVICE**
DRAHTLOSE VORRICHTUNG, NETZWERKKNOTEN UND DAVON AUSGEFÜHRTE VERFAHREN ZUR KONFIGURATIONSHANDHABUNG DER DRAHTLOSEN VORRICHTUNG
DISPOSITIF SANS FIL, NOEUD DE RÉSEAU ET PROCÉDÉS MIS EN OEUVRE AU MOYEN DE CEUX-CI POUR GÉRER UNE CONFIGURATION DU DISPOSITIF SANS FIL

(43) Date of publication of application: 26.10.2022
(73) Proprietor: TELEFONAKTIEBOLAGET LM ERICSSON (PUBL), 164 83 Stockholm (SE)
(72) Inventor: JIMÉNEZ, Jaime, 02780 ESPOO (FI); HARTKE, Klaus, 6006 Luzern (CH)
(74) Representative: Ericsson
(86) International application number: PCT/SE2019/051294
(87) International publication number: WO 2021/126023

(56) References cited:
- WO-A1-2016/053846
- WO-A1-2016/111914
- WO-A1-2016/111914
- WO-A1-2016/122373
- WO-A1-2017/078580
- WO-A1-2017/138849
- US-A1- 2006 040 645
- US-A1- 2018 295 190
- "Lightweight M2M - Connectivity Management Object (LwM2M Object - ConnMgmt)", no. 1, 22 February 2019 (2019-02-22), pages 1 - 29, XP064193474, Retrieved from the Internet <URL:ftp/Public_documents/DM/LightweightM2M/2019/> [retrieved on 20190326]
- "Lightweight Machine to Machine Technical Specification: Transport Bindings", 6 August 2018 (2018-08-06), pages 1 - 67, XP064192961, Retrieved from the Internet <URL:ftp/Public_documents/DM/LightweightM2M/Permanent_documents/> [retrieved on 20180807]
- Z SHELBY ET AL: "RFC 7252. The Constrained Application Protocol (CoAP)", 1 June 2014 (2014-06-01), pages 1 - 112, XP055428408, Retrieved from the Internet <URL:https://tools.ietf.org/pdf/rfc7252.pdf>

## Description

### TECHNICAL FIELD

The present disclosure relates generally to a wireless device and methods performed thereby for handling configuration of the wireless device. The present disclosure also relates generally to a network node, and methods performed thereby for handling configuration of the wireless device. The present disclosure further relates generally to a computer program product, comprising instructions to carry out the actions described herein, as performed by the wireless device, or the network node. The computer program product is stored on a computer-readable storage medium.

### BACKGROUND

Communication devices within a wireless communications network may be wireless devices such as e.g., User Equipments (UEs), stations (STAs), mobile terminals, wireless terminals, terminals, and/or Mobile Stations (MS). Wireless devices are enabled to communicate wirelessly in a cellular communications network or wireless communication network, sometimes also referred to as a cellular radio system, cellular system, or cellular network. The communication may be performed e.g., between two wireless devices, between a wireless device and a regular telephone, and/or between a wireless device and a server via a Radio Access Network (RAN) , and possibly one or more core networks, comprised within the wireless communications network. Wireless devices may further be referred to as mobile telephones, cellular telephones, laptops, or tablets with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

The wireless communications network covers a geographical area which may be divided into cell areas, each cell area being served by a network node, such as radio network node or Base Station (BS), which sometimes may be referred to as e.g., Transmission Point (TP), Radio Base Station (RBS), gNB, evolved Node B ("eNB"), "eNodeB", "NodeB", "B node", or BTS (Base Transceiver Station), depending on the technology and terminology used. The base stations may be of different classes such as e.g., Wide Area Base Stations, Medium Range Base Stations, Local Area Base Stations and Home Base Stations, based on transmission power and thereby also cell size. A cell is the geographical area where radio coverage is provided by the base station at a base station site. One base station, situated on the base station site, may serve one or several cells. Further, each base station may support one or several communication technologies. The wireless communications network may also be a non-cellular system, comprising network nodes which may serve receiving nodes, such as wireless devices, with serving beams. In 3rd Generation Partnership Project (3GPP) Long Term Evolution (LTE), base stations, which may be referred to as eNodeBs or even eNBs, may be directly connected to one or more core networks. In the context of this disclosure, the expression Downlink (DL) may be used for the transmission path from the base station to the wireless device. The expression Uplink (UL) may be used for the transmission path in the opposite direction i.e., from the wireless device to the base station.

In 3rd Generation Partnership Project (3GPP) Long Term Evolution (LTE), base stations, which may be referred to as eNodeBs or even eNBs, may be directly connected to one or more core networks. All data transmission in LTE is controlled by the radio base station.

The standardization organization 3GPP is currently in the process of specifying a New Radio Interface called NR or 5G-UTRA, as well as a Fifth Generation (5G) Packet Core Network, which may be referred to as Next Generation Core Network, abbreviated as NG-CN, NGC or 5G CN.

### Internet of Things (IoT)

The Internet of Things (IoT) may be understood as an internetworking of communication devices, e.g., physical devices, vehicles, which may also referred to as "connected devices" and "smart devices", buildings and other items-embedded with electronics, software, sensors, actuators, and network connectivity that may enable these objects to collect and exchange data. The loT may allow objects to be sensed and/or controlled remotely across an existing network infrastructure.

"Things," in the loT sense, may refer to a wide variety of devices such as heart monitoring implants, biochip transponders on farm animals, electric clams in coastal waters, automobiles with built-in sensors, DNA analysis devices for environmental/food/pathogen monitoring, or field operation devices that may assist firefighters in search and rescue operations, home automation devices such as the control and automation of lighting, heating, e.g. a "smart" thermostat, ventilation, air conditioning, and appliances such as washer, dryers, ovens, refrigerators or freezers that may use Wi-Fi for remote monitoring. These devices may collect data with the help of various existing technologies and then autonomously flow the data between other devices.

### Machine Type Communication (MTC)

Machine Type Communication (MTC) has, especially in the context of the Internet of Things (IoT), shown to be a growing market segment. An MTC device may be a communication device, typically a wireless communication device or simply wireless device, that is a self and/or automatically controlled unattended machine and that is typically not associated with an active human user in order to generate data traffic. An MTC device may be typically more simple, and typically associated with a more specific application or purpose, than, and in contrast to, a conventional mobile phone or smart phone.

MTC involves communication in a wireless communication network to and/or from MTC devices, in which communication typically may be of quite different nature and with other requirements than communication associated with e.g. conventional mobile phones and smart phones. In the context of the loT it is evident that MTC traffic will be increasing and thus needs to be increasingly supported in wireless communication systems.

### Constrained Application Protocol (CoAP)

Some of the devices that may make use of IoT or MTC may be considered constrained devices. A constrained device or constrained node may be understood as a node where some of the characteristics of Internet nodes may not be attainable, often due to cost constraints and/or physical constraints on characteristics such as size, weight, and available power and energy. For example, a constrained device may be a sensor in a car or in a building.

The Constrained Application Protocol (CoAP) may be understood as a generic Representational State Transfer (REST)-based application-layer protocol for devices with constraints on system resources like processing power and memory size (https://tools.ietf.org/html/rfc7252). It may be understood as defined in RFC7252. CoAP may be considered to enable constrained devices to communicate with the wider Internet using similar protocols.

On current deployments, CoAP-based solutions such as the Open Mobile Alliance (OMA) Lightweight Machine to Machine Protocol (LWM2M) are becoming increasingly popular in order to manage devices in a REST-based fashion.

LWM2M may be understood to provide a simple mechanism for device management of IoT Devices. It may provide interfaces for Information Reporting, Service Enablement, Firmware Updates and a generic way to securely manage a device.

In most cases, deployments may be use the default configurations for CoAP endpoints. This is causing communication problems and extra hassle when deploying loT applications. The use of default configurations also leaves the devices vulnerable to simple attacks, as discussed for example in https://www.zdnet.com/article/the-coap-protocol-is-the-next-big-thing-for-ddos-attacks/.

Current configuration efforts are more oriented towards radio network properties or application specific configuration. Great care is being placed on securing the identity of the device, its network security, and controlling access to it. However, it is currently not possible to configure various application layer parameters that affect the performance of the device.

WO 2016/111914 A1 discloses network entities that indicate and negotiate one or more new protocols for communications using a current protocol.

Lightweight M2M - Connectivity Management Object (LwM22M Object - ConnMgmt) discloses a set of objects to be used in conjunction with the Lightweight M2M enabler in order to manage connectivity at a device.

Lightweight Machine to Machine Technical Specification : Transport Bindings discloses the transport bindings of the Lightweight Machine-to-Machine (LwM2M) protocol version 1.1.

Z. Shelby et.al RFC 7252. The Constrained Application Protocol (CoAP) discloses the Constrained Application Protocol as a specialized web transfer protocol for use with constrained nodes and constrained networks.

### SUMMARY

The present invention is set out in the appended claims.

It is an object of embodiments herein to improve the handling of configuration of wireless devices in a communications network. It is a particular object of embodiments herein to improve the handling of configuration of constrained wireless devices in a communications network.

According to a first aspect of embodiments herein, the object is achieved by a method performed by a wireless device. The wireless device operates in a communications network. The wireless device sends an indication to a network node operating in the communications network. The indication comprises a configuration object in Constrained Application Protocol (CoAP). The configuration object comprises one or more configuration parameters of the wireless device in the communications network. The wireless device then receives another indication from the network node. The another indication comprises a first instruction to configure the wireless device to use at least one changed configuration parameter of the one or more configuration parameters. The at least one changed configuration parameter is adapted to one or more policies of the communications network for the wireless device.

According to a second aspect of embodiments herein, the object is achieved by a method performed by the network node. The network node operates in the communications network. The network node receives the indication to from the wireless device operating in the communications network. The indication comprises the configuration object in CoAP. The configuration object comprises the one or more configuration parameters of the wireless device in the communications network 10. The network node sends the another indication to the wireless device. The another indication comprises the first instruction to configure the wireless device to use the at least one changed configuration parameter of the one or more configuration parameters. The at least one changed configuration parameter is adapted to the one or more policies of the communications network for the wireless device.

According to a third aspect of embodiments herein, the object is achieved by the wireless device, configured to operate in the communications network. The wireless device is configured to send the indication to the network node configured to operate in the communications network. The indication is configured to comprise the configuration object in CoAP. The configuration object is configured to comprise the one or more configuration parameters of the wireless device in the communications network. The wireless device is further configured to receive the another indication from the network node. The another indication comprises the first instruction to configure the wireless device to use the at least one changed configuration parameter of the one or more configuration parameters. The at least one changed configuration parameter is configured to be adapted to the one or more policies of the communications network for the wireless device.

According to a fourth aspect of embodiments herein, the object is achieved by the network node, configured to operate in the communications network. The network node is further configured to receive the indication to from the wireless device configured to operate in the communications network. The indication comprises the configuration object in CoAP. The configuration object is configured to comprise the one or more configuration parameters of the wireless device in the communications network. The network node is further configured to send the another indication to the wireless device. The another indication is configured to comprise the first instruction to configure the wireless device to use the at least one changed configuration parameter of the one or more configuration parameters. The at least one changed configuration parameter is configured to be adapted to the one or more policies of the communications network for the wireless device.

According to a fifth aspect of embodiments herein, the object is achieved by a computer program, comprising instructions which, when executed on at least one processor, cause the at least one processor to carry out the method performed by the wireless device.

According to a sixth aspect of embodiments herein, the object is achieved by a computer-readable storage medium, having stored thereon the computer program, comprising instructions which, when executed on at least one processor, cause the at least one processor to carry out the method performed by the wireless device.

According to a seventh aspect of embodiments herein, the object is achieved by a computer program, comprising instructions which, when executed on at least one processor, cause the at least one processor to carry out the method performed by the network node.

According to an eighth aspect of embodiments herein, the object is achieved by a computer-readable storage medium, having stored thereon the computer program, comprising instructions which, when executed on at least one processor, cause the at least one processor to carry out the method performed by the network node.

In an embodiment of the first aspect, and the second aspect the one or more configuration parameters and/or the at least one changed configuration parameter comprise at least one of: a message transmission parameter and a transport transmission parameter. In a following embodiment of the embodiment of the first aspect, and the second aspect, at least one of: the message transmission parameter is a CoAP parameter, and the transport transmission parameter is a Datagram Transport Layer Security timer value.

In another embodiment of the first aspect, and the second the one or more configuration parameters and/or the at least one changed configuration parameter comprises at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In a further embodiment of the first aspect, and the second aspect the configuration object further comprises one or more object links to one or more existing configuration parameters in one or more other configuration objects in the wireless device. In a following embodiment of the further embodiment of the first aspect and the second aspect, the one or more object links are to one or more existing configuration parameters comprising at least one of: Lifetime OL, Default Min Period OL, Default Max Period OL and Disable Timeout OL.

In an even further embodiment of the first aspect and second aspect, the sending and the receiving are performed during a procedure of the wireless device in the communications network selected from: bootstrapping, device management, service enablement, and firmware update.

In yet another embodiment of the first aspect and second aspect, the sending and the receiving are performed using a Lightweight Machine to Machine protocol.

In an embodiment of the first aspect and second aspect, the communications network operates on an Internet-of-Things technology.

In another embodiment of the first aspect and second aspect, the wireless device is a constrained device.

In a further embodiment of the first aspect and second aspect, the indication is sent in a 2.05 content response.

In an embodiment of the first aspect, the method further comprises *sending* a first indication to the network node, the first indication indicating a capability to reconfigure the one or more configuration parameters based on an instruction from the network node, and *receiving* a second indication from the network node in response to sending the first indication, the second indication indicating a request to provide the one or more configuration parameters, and wherein the indication is a third indication, and the another indication is a fourth indication.

In another embodiment of the first aspect, the indication is a third indication and the another indication is a fourth indication, and the method further comprises *sending* a fifth indication to the network node, the fifth indication confirming the reconfiguration of the wireless device with the at least one changed configuration parameter, and *receiving* a sixth indication from the network node, in response to sending the fifth indication, the sixth indication instructing the wireless device to reboot.

In an embodiment of the second aspect, the method further comprises *receiving* a first indication from the wireless device, the first indication indicating a capability to reconfigure the one or more configuration parameters based on an instruction from the network node, and *sending* a second indication to the wireless device in response to receiving the first indication, the second indication indicating a request to provide the one or more configuration parameters, and wherein the indication is a third indication, and the another indication is a fourth indication.

In another embodiment of the second aspect, the indication is a third indication and the another indication is a fourth indication, and the method further comprises *receiving* a fifth indication from the wireless device, the fifth indication confirming the reconfiguration of the wireless device with the at least one changed configuration parameter, and *sending* a sixth indication to the wireless device, in response to receiving the fifth indication, the sixth indication instructing the wireless device to reboot.

In yet another embodiment of the second aspect, the indication is a third indication, and the method further comprises *determining,* based on the received third indication, whether or not to change the at least one configuration parameter, the determining being based on the one or more policies of the communications network for the wireless device.

In an embodiment of the third aspect, the indication is configured to be sent in a 2.05 content response.

In another embodiment of the third aspect, the wireless device is further configured to send a first indication to the network node. The first indication being configured to indicate a capability to reconfigure the one or more configuration parameters based on an instruction from the network node The wireless device is further configured to receive a second indication from the network node in response to sending the first indication, the second indication being configured to indicate a request to provide the one or more configuration parameters, and wherein the indication is a third indication, and the another indication is a fourth indication.

In yet another embodiment of the third aspect, the indication is a third indication and the another indication is a fourth indication, and wherein the wireless device is further configured to send a fifth indication to the network node, the fifth indication being configured to confirm the reconfiguration of the wireless device with the at least one changed configuration parameter, and receive a sixth indication from the network node, in response to sending the fifth indication, the sixth indication being configured to instruct the wireless device to reboot. In an embodiment of the first aspect, and the second aspect the one or more configuration parameters and/or the at least one changed configuration parameter comprise at least one of: a message transmission parameter and a transport transmission parameter. In a following embodiment of the embodiment of the first aspect, and the second aspect, at least one of: the message transmission parameter is a CoAP parameter, and the transport transmission parameter is a Datagram Transport Layer Security timer value.

In an embodiment of the fourth aspect, the one or more configuration parameters and/or the at least one changed configuration parameter is configured to comprise at least one of: a message transmission parameter and a transport transmission parameter. In a following embodiment of the embodiment of the fourth aspect, at least one of: the message transmission parameter is a CoAP parameter, and the transport transmission parameter is a Datagram Transport Layer Security timer value.

In another embodiment of the fourth aspect the one or more configuration parameters and/or the at least one changed configuration parameter are configured to comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In a further embodiment of the fourth aspect the configuration object is further configured to comprise one or more object links to one or more existing configuration parameters in one or more other configuration objects in the wireless device. In a following embodiment of the further embodiment of the fourth aspect, the one or more object links are configured to be one or more existing configuration parameters comprising at least one of: Lifetime OL, Default Min Period OL, Default Max Period OL and Disable Timeout OL.

In an even further embodiment of the fourth aspect, wherein to send and to receive are configured to be performed during a procedure of the wireless device in the communications network selected from: bootstrapping, device management, service enablement, and firmware update.

In yet another embodiment of the fourth aspect, to receive and to send are configured to be performed using a Lightweight Machine to Machine protocol.

In an embodiment of the fourth aspect, the communications network is configured to operate on an Internet-of-Things technology.

In another embodiment of the fourth aspect, the wireless device is configured to be a constrained device.

In a further embodiment of the fourth aspect, the indication is configured to be received in a 2.05 content response.

In an embodiment of the fourth aspect, the network node is further configured to receive a first indication from the wireless device, the first indication being configured to indicate a capability to reconfigure the one or more configuration parameters based on an instruction from the network node, and the network node if further configured to send a second indication to the wireless device in response to receiving the first indication, the second indication being configured to indicate a request to provide the one or more configuration parameters, and wherein the indication is a third indication, and the another indication is a fourth indication.

In another embodiment of the fourth aspect, the indication is a third indication and the another indication is a fourth indication, and the network node is further configured to receive a fifth indication from the wireless device, the fifth indication being configured to confirm the reconfiguration of the wireless device with the at least one changed configuration parameter, and the network node being configured to send a sixth indication to the wireless device, in response to receiving the fifth indication, the sixth indication being configured to instruct the wireless device to reboot.

In yet another embodiment of the fourth aspect, the indication is a third indication, and the network node is further configured to determine, based on the third indication configured to be received, whether or not to change the at least one configuration parameter, the determining being configured to be based on the one or more policies of the communications network for the wireless device.

By sending the indication comprising the configuration object in CoAP comprising the one or more configuration parameters to the network node, the wireless device enables the network node to determine whether the one or more configuration parameters are the most optimal for the wireless device to use based on the one or more policies of the communications network. If it is/they are not, the network node is then enabled to determine whether or not to change the at least one configuration parameter and to indicate the result of that determination to the wireless device by sending the another indication to it. Hence, reconfiguration of the wireless device, which may be a constrained devices is enabled, such that it is enabled to optimize its configuration to operate within the communications network more efficiently.

### BRIEF DESCRIPTION OF THE DRAWINGS

Examples of embodiments herein are described in more detail with reference to the accompanying drawings, according to the following description.
Figure 1 is a schematic diagram illustrating two non-limiting examples in a) and b), respectively, of a communications network, according to embodiments herein.
Figure 2 is a flowchart depicting embodiments of a method in a wireless device, according to embodiments herein.
Figure 3 is a flowchart depicting embodiments of a method in a network node, according to embodiments herein.
Figure 4 is a flowchart depicting embodiments of a method in a communications network according to embodiments herein.
Figure 5 is a schematic block diagram illustrating two non-limiting examples, a) and b), of a wireless device, according to embodiments herein.
Figure 6 is a schematic block diagram illustrating two non-limiting examples, a) and b), of a network node, according to embodiments herein.

### DETAILED DESCRIPTION

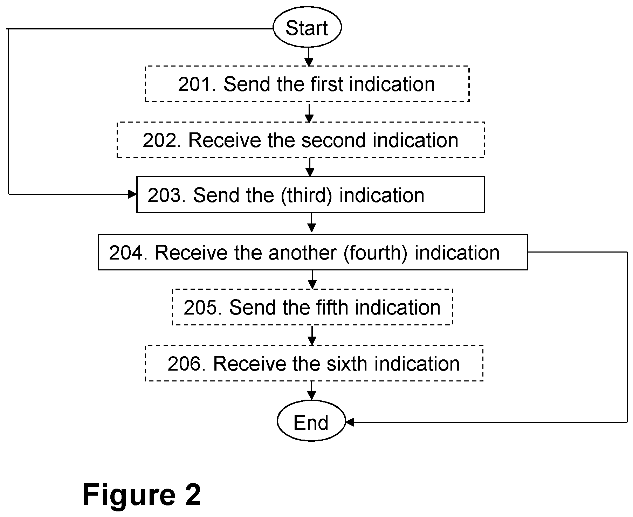

The present invention is best understood with reference to Figures 2 to 6.

As part of the development of embodiments herein, a problem with exiting methods will first be identified and discussed.

Common problems on LwM2M clients today are due to misconfiguration of the endpoints. Such misconfiguration typically takes place happens at the application layer, at the network level, and/or even due to faulty deployments.

Common issues are the use of the default settings, which may not be best suited for certain situations, depending on the use case. For example, the requirements of a SierraWireless mangOH device running CoAP over LTE may be different than those of a ZigBee DotDot CoAP endpoint over IEEE 802.15.4, even if both use CoAP as application layer protocol. The use of different protocols may be also due to different use cases with different requirements. For example, CoAP over LTE may be understood to imply that the device may connect to a base station in a similar fashion as a mobile phone, whereas CoAP over 802.15.4 may be understood to imply that the device has much less battery and computing power and may be connected to a nearby gateway, similar to Wifi.

As an example of the issues that may be caused by default configurations or settings, the default retransmission timeout in CoAP - circa 2 seconds and doubled for every retransmission - has been found to cause congestion collapse in some scenarios, as discussed for example in https://tools.ietf.org/html/draft-jarvinen-core-fasor-01. In other cases, the default configuration has even facilitated the use of CoAP on Distributed Denial of Service (DDOS) attacks, as discussed for example in https://www.zdnet.com/article/the-coap-protocol-is-the-next-big-thing-for-ddos-attacks/, by exposing the "/.well-known/core" resource, unprotected, on the wider Internet.

Although CoAP endpoints may often be configured, there is today no standard way to implement that and it is such configuration is not performed by device management protocols today. If devices are configured at the CoAP layer, this normally implies flashing the device with a new firmware.

Several embodiments are comprised herein, which address the limitations of the existing methods. As an overview, embodiments herein may be understood to provide a mechanism to expose common configuration parameters that may be used in CoAP today, towards the LwM2M layer and the LwM2M manager. A network node, acting as manager, may then create various profiles that may enable to change those parameters, depending on the use case. The goal may be understood to be to fine-tune the CoAP endpoints to work more efficiently. According to embodiments herein, a new resource, e.g., "/coap-config", may be created, which may expose those parameters in various representations, e.g., IP-based Smart Objects (IPSO) Objects, YANG, ... and offer discovery using common CoAP content formats. IPSO may be understood as a data model for IP-based Smart Objects, using the OMA standard. Yang may be understood as a data modelling language for network management protocols such as NETCONF and RESTCONF, Internet Engineering Task Force (IETF) standard. Further particularly, some embodiments herein may be considered to be related to fine-tuning of CoAP endpoints with LwM2M.

The embodiments will now be described more fully hereinafter with reference to the accompanying drawings, in which examples are shown. In this section, embodiments herein are illustrated by exemplary embodiments. It should be noted that these embodiments are not mutually exclusive. Components from one embodiment or example may be tacitly assumed to be present in another embodiment or example and it will be obvious to a person skilled in the art how those components may be used in the other exemplary embodiments.

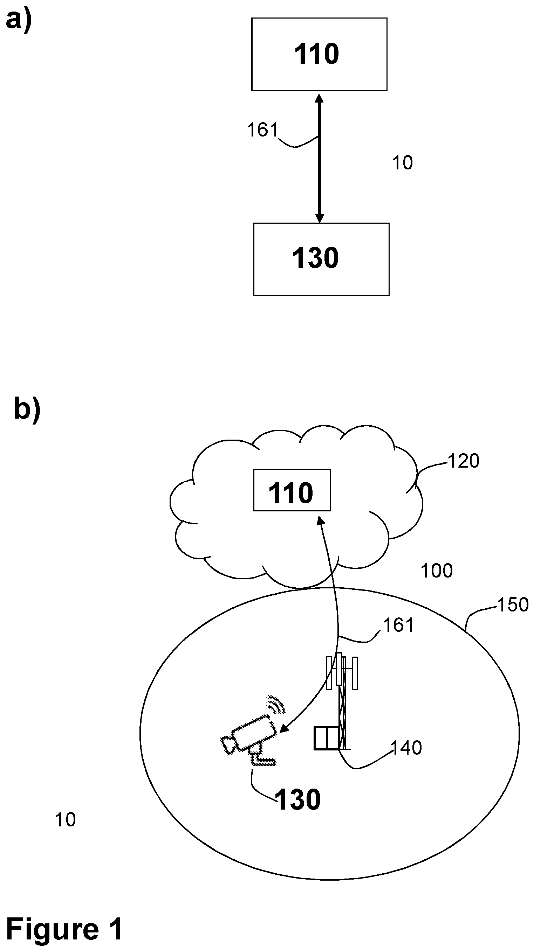

**Figure 1** depicts two non-limiting examples, in panels "a" and "b", respectively, of a **communications network 10,** in which embodiments herein may be implemented. In some example implementations, such as that depicted in the non-limiting example of Figure 1a), the communications network 10 may be a computer network. In other example implementations, such as that depicted in the non-limiting example of Figure 1b), the communications network 10 may be implemented in a telecommunications network 100, sometimes also referred to as a cellular radio system, cellular network or wireless communications system. In some examples, the telecommunications network 100 may comprise network nodes which may serve receiving nodes, such as wireless devices, with serving beams.

The telecommunications network 100 may for example be a Narrow-Band IoT (NB-IoT) network, a Category M1 (CATM) network, a Global System for Mobile communications (GSM) network, or another Internet service provider (ISP)-oriented network.

In some examples, the telecommunications network 100 may for example be a network such as 5G system, or Next Gen network. The telecommunications network 100 may also support other technologies, such as a Long-Term Evolution (LTE) network, e.g. LTE Frequency Division Duplex (FDD), LTE Time Division Duplex (TDD), LTE Half-Duplex Frequency Division Duplex (HD-FDD), LTE operating in an unlicensed band, Wideband Code Division Multiple Access (WCDMA), Universal Terrestrial Radio Access (UTRA) TDD, GSM/Enhanced Data Rate for GSM Evolution (EDGE) Radio Access Network (GERAN) network, Ultra-Mobile Broadband (UMB), EDGE network, network comprising of any combination of Radio Access Technologies (RATs) such as e.g. MultiStandard Radio (MSR) base stations, multi-RAT base stations etc., any 3rd Generation Partnership Project (3GPP) cellular network, Wireless Local Area Network/s (WLAN) or WiFi network/s, Worldwide Interoperability for Microwave Access (WiMax), IEEE 802.15.4-based low-power short-range networks such as IPv6 over Low-Power Wireless Personal Area Networks (6LowPAN), Zigbee, Z-Wave , Bluetooth Low Energy (BLE), or any cellular network or system.

The communications network 10 comprises a plurality of network nodes, whereof a **network node 110** is depicted in Figure 1. The network node 110 may be understood as a computer system. The network node 110 may be understood to have a capability to communicate with communication devices being constrained devices. In typical examples, the network node 110 may be a LightWeight Machine to Machine protocol (LWM2M) server. In some examples, the network node 110 may support operation on the CoAP and on the DNS protocol.

In some examples, the network node 110 may be implemented, as depicted in the non-limiting example of Figure 1a) and 1b), as a standalone server in e.g., a host computer in the **cloud 120.** The network node 110 may in some examples be a distributed node or distributed server, with some of its functions being implemented locally, e.g., by a client manager, and some of its functions implemented in the cloud 120, by e.g., a server manager. Yet in other examples, the network node 110 may also be implemented as processing resources in a server farm. The network node 110 may be under the ownership or control of a service provider, or may be operated by the service provider or on behalf of the service provider.

The communications network 10 comprises a **wireless device 130,** as depicted in the non-limiting example scenario of Figure 1. The communications network 10 may also comprise other communication devices. The wireless device 130 may be a UE or a Customer Premises Equipment (CPE) which may be understood to be enabled to communicate data, with another entity, such as a server, a laptop, a Machine-to-Machine (M2M) device, device equipped with a wireless interface, or any other radio network unit capable of communicating over a wired or radio link in a communications system such as the communications network 10. In some embodiments, the wireless device 130 may be understood to be a constrained device in e.g., an loT network. In some particular embodiments, the wireless device 130 may be understood to be a constrained device operating on LWM2M. The wireless device 130 may run a client application, which may be enabled to communicate with a host application run by the wireless device 130. The wireless device 130 may be understood to lack a capability to directly query the network node 110. For example, the wireless device 130 may support operation on CoAP.

The wireless device 130 may be a wireless device comprised in the communications network 10, such as a Bluetooth Low Energy (BLE) User Equipment (UE). The wireless device 130 may be enabled to communicate wirelessly in the communications network 10 and, in some particular examples, may be able support beamforming transmission. The communication may be performed e.g., via a RAN and possibly one or more core networks, comprised within the communications network 10.

The wireless device 130 may be also e.g., a mobile terminal, wireless terminal and/or mobile station, mobile telephone, cellular telephone, or laptop, just to mention some further examples. The wireless device 130 may be, for example, portable, pocket-storable, hand-held, computer-comprised, a sensor, camera, or a vehicle-mounted mobile device, enabled to communicate voice and/or data, via a RAN, with another entity, such as a server, a laptop, a Personal Digital Assistant (PDA), or a tablet computer, sometimes referred to as a tablet with wireless capability, or simply tablet, a Machine-to-Machine (M2M) device, a device equipped with a wireless interface, such as a printer or a file storage device, modem, Laptop Embedded Equipped (LEE), Laptop Mounted Equipment (LME), USB dongles or any other radio network unit capable of communicating over a wired or radio link in the communications network 10.

The telecommunications network 100 may cover a geographical area which, which in some embodiments may be divided into cell areas, wherein each cell area may be served by a **radio network node 140,** although, one radio network node may serve one or several cells. In the example of Figure 1b, the radio network node 140 serves a **cell 150.** The radio network node 140 may be e.g., a gNodeB. That is, a transmission point such as a radio base station, for example an eNodeB, or a Home Node B, a Home eNode B or any other network node capable to serve a wireless device, such as a user equipment or a machine type node in the communications network 10. The radio network node 140 may be of different classes, such as, e.g., macro eNodeB, home eNodeB or pico base station, based on transmission power and thereby also cell size. In some examples, the radio network node may serve receiving nodes with serving beams. The radio network node 140 may support one or several communication technologies, and its name may depend on the technology and terminology used. Any of the radio network nodes that may be comprised in the communications network 10 may be directly connected to one or more core networks.

The network node 110 is configured to communicate within the communications network 10 with the wireless device 130 over a **first link 161,** e.g., a radio link, an infrared link, or a wired link. The first link 161 may be comprised of a plurality of individual links. The wireless device 130 is configured to communicate within the communications network 10 with the radio network node 140, in the cell 150, over a **second link 162,** e.g., a radio link, an infrared link, or a wired link. The second link 162 may be comprised of a plurality of individual links.

The first link 161 may be a direct link or it may go via one or more computer systems or one or more core networks in the communications network 10, which are not depicted in Figure 1, or it may go via an optional intermediate network. The intermediate network may be one of, or a combination of more than one of, a public, private or hosted network; the intermediate network, if any, may be a backbone network or the Internet; in particular, the intermediate network may comprise two or more sub-networks, which is not shown in Figure 1.

In general, the usage of "first", "second", etc.. herein may be understood to be an arbitrary way to denote different elements or entities, and may be understood to not confer a cumulative or chronological character to the nouns they modify.

Embodiments of method performed by the wireless device 130 will now be described with reference to the flowchart depicted in **Figure 2**. The method may be understood to be for handling configuration of the wireless device 130. The wireless device 130 operates in the communications network 10.

In some embodiments, the communications network 10 may operate on an Internet-of-Things, IoT, technology

In some embodiments, the wireless device 130 may be a constrained device. For examples, the wireless device 130 may be a constrained device which may use the LwM2M protocol. The wireless device 130 may run a client application capable of requesting resources or services from a host application run by the network node 110.

The method may comprise the actions described below. Several embodiments are comprised herein. In some embodiments some of the actions may be performed. In some embodiments all the actions may be performed. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 2, optional actions 205 and 206 are indicated with dashed boxes.

### Action 201

The wireless device 130 may be configured to use one or more configuration parameters, e.g., transmission parameters, based on a fixed rule. According to embodiments herein, the wireless device 130 may be able to change any one of the configuration parameters if instructed to do so by the network node 110.

In this Action 201, the wireless device 130 may send a first indication to the network node 110. The first indication may indicate a capability, of the wireless device 130, to reconfigure one or more configuration parameters of the wireless device 130 in the communications network 10, based on an instruction from the network node 110.

This Action 201 may be performed since the capability may not be mandatory to implement. Therefore, by sending the first indication in this Action 201, the wireless device 130 may enable the network node 110 to discover whether this capability is available at the wireless device 130.

The sending, e.g., providing, in this Action 201 may be performed, e.g., via the first link 161.

The one or more configuration parameters may be transmission parameters. For example, in some embodiments, the one or more configuration parameters may comprise at least one of: a message transmission parameter and a transport transmission parameter. In some embodiments, the message transmission parameter may be a CoAP parameter, and or the transport transmission parameter may be a Datagram Transport Layer Security (DTLS) timer value. DTLS may be understood as an IETF standard for transport-layer security that may be used by CoAP.

In some particular embodiments, the one or more configuration parameters may comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In some examples, the wireless device 130 may send the first indication during the course of a Bootstrapping and Registration procedures, as e.g., specified by the Open Mobile Alliance Device Management (OMA DM) - LWM2M. The Bootstrapping procedure may be understood to be used to onboard an IoT device into a management system, providing key material that may be necessary to establish a secure channel. The registration procedure may be understood to allow the network node 110, e.g., a manager, to know which are the properties of the wireless device 130, the measurements it may be able to take, when it may be able to take them, etc. These procedures will be briefly described later.

In some examples, the wireless device 130 may be an LwM2M Client and the network node 110 may be an LwM2M Server. The first indication may be, for example, a "2.05 Content" response comprising a "/coap-config" content. The first indication may be sent in this Action 201 as a response (Res) to a request (Req) from the network node 110 to discover whether the capability may be available at the wireless device 130", as shown below:

```
             Int: LS -> LC
             Req: GET coap://[IPv6]/.well-known/core
             Res: 2.05 Content
                  </coap-config>;rt="oma.lwm2m";ct=110
```

The capability of the wireless device 130 may be indicated in accordance with a new CoAP Configuration Object according to embodiments herein. The new CoAP Configuration Object may comprise CoAP transmission parameters, (https://tools.ietf.org/html/rfc7252#section-4.8), DTLS timer values (https://tools.ietf.org/html/rfc6347#section-4.2.4.1), and potentially other related configuration parameters from the LwM2M specification, which may be presented as Object Links. This new CoAP Configuration Object may be preconfigured in both of the wireless device 130 and the network node 110, which may know how to parse it. The new CoAP Configuration Object according to embodiments herein may be as follows:

| OBJECT: LwM2M COAP-CONFIG | | |
|---|---|---|
| +--ro | CoAP-CONFIG* [instance_number] | |
| +--rw | instance_number | uint16 |
| +--rw | ACK_TIMEOUT | decimal64 |
| +--rw | ACK_RANDOM_FACTOR | decimal64 |
| +--rw | MAX_RETRANSMIT | decimal64 |
| +--rw | NSTART | decimal64 |
| +--rw | DEFAULT_LEISURE | decimal64 |
| +--rw | PROBING_RATE | decimal64 |
| +--rw | DTLS_RETRANSMISSION_TIMER | decimal64 |
| +--rw | Lifetime OL (/1/1) | |
| +--rw | Default Min Period OL (/1/2) | |
| +--rw | Default Max Period OL (/1/3) | |
| +--rw | Disable Timeout OL (/1/5) | |
| +---x | Reboot | |

In the object, rw may be understood to designate configuration data, and may be enabled to be read and write, ro may be understood to designate state data, and may be enabled to be read only, and x may be understood to designate to an action.

The CoAP-CONFIG* may be understood as a configuration file that may be stored on the wireless device 130 and that may be configurable by the network node 110, e.g., as LwM2M manager. The CoAP-CONFIG* may be understood to comprise CoAP parameters that may be modified by the network node 110. The instance_number may be understood as a number used to differentiate from other instances of the same object. Uint16, an integer value, is simply indicating the value of the instance. Timeout may be understood to designate the time the network node 110 may want to wait until the reboot is executed. The RANDOM_FACTOR, MAX_RETRANSMIT, NSTART, DEFAULT_LEISURE, PROBING_RATE, and DTLS_RETRANSMISSION_TIMER may be understood to refer to values specified in CoAP, see https://tools.ietf.org/html/rfc7252#section-4.8. The Disable Timeout OL, and Default min/max Period OL may be understood to refer to a value specified in LwM2M. Reboot may be understood to designate a command to the wireless device 130, that is, an executable resource, to trigger the timeout to reboot.

Other configuration parameters may be added later on, for example, to limit User Datagram Protocol (UDP) packet amplification, such as a field that may limit the maximum packet size. A new parameter called BLOCK may specify the maximum CoAP block size (https://tools.ietf.org/html/rfc7959#section-2.1).

According to the foregoing, the content of the "/coap-config" comprised in the first indication may be the new CoAP Configuration Object according to embodiments herein "LWM2M CoAP-Config".

The sending of the first indication in this first Action 201 may be performed after the wireless device 130 may have registered with the network node 110. In some examples, the sending in this Action 201 may be performed during a procedure of the wireless device 130 in the communications network 10 selected from: bootstrapping, device management, service enablement, and firmware update.

### Action 202

In this Action 202, the wireless device 130 may receive a second indication from the network node 110 in response to sending the first indication in Action 201. The second indication may indicate a request to provide the one or more configuration parameters. For example, the second indication, may be a GET operation on the object "LWM2M CoAP-CONFIG" described in Action 201, such as:

```
             Int: LS -> LC
             Req: GET coap://[IPv6]/coap-config
```

The receiving, e.g., obtaining, in this Action 202 may be performed, e.g., via the first link 161.

### Action 203

In this Action 203, the wireless device 130 sends an indication to the network node 110 operating in the communications network 10. The indication comprises a configuration object in CoAP. The configuration object comprises one or more configuration parameters of the wireless device 130 in the communications network 10, as described earlier.

The sending in this Action 230 may be performed using LwM2M. One of skill in the art may understand that younger or other protocols with similar functionality may be also used.

The configuration object may further comprise one or more object links to one or more existing configuration parameters in one or more other configuration objects in the wireless device 130. In some embodiments, the one or more object links may be to one or more existing configuration parameters comprising at least one of: Lifetime OL, Default Min Period OL, Default Max Period OL and Disable Timeout OL.

The indication may be understood to be a third indication.

The indication may be sent in a 2.05 content response. The third indication may be, for example, a "2.05 Content" response (Res) to the Request (Req) from the network node 110 received in Action 202. The a "2.05 Content" response may be with the following SenML, indicating the default CoAP protocol parameters expressed using the LwM2M object model, and serialized in SenML:

```
             Res: 2.05 Content
                 {"bn": "/XXXX/0/",
                   "e": [
                     {"n": "0", "v": 2},
                     {"n": "1", "v": 1.5},
                     {"n": "2", "v": 4},
                     {"n": "3" , "v": 1},
                     {"n": "4" , "v": 5},
                     {"n": "5", "v": 1},
                     {"n": "6", "v": 1}]
                 }
```

The sending, e.g., providing, in this Action 203 may be performed, e.g., via the first link 161.

In some embodiments, the sending in this Action 203 may be performed during a procedure of the wireless device 130 in the communications network 10 selected from: bootstrapping, device management, service enablement, and firmware update.

### Action 204

After the wireless device 130 may have sent the third indication to the network node 110, the network node 110 may have queried its internal database with device profiles, and searched for a suitable configuration. The suitable configuration the network node 1130 may have found may require a change to the existing configuration of the wireless device 130.

In this Action 204, the wireless device 130, receives another indication from the network node 110. The another indication comprises a first instruction to configure the wireless device 130 to use at least one changed configuration parameter of the one or more configuration parameters. The at least one changed configuration parameter is adapted to one or more policies of the communications network 10 for the wireless device 130.

The another indication may therefore be understood as enabling fine-tuning of the wireless device 130 to work more efficiently. The another indication may be understood to be a fourth indication.

The first instruction may be understood as a first example of the instruction from the network node 110 mentioned in Action 201, based on which the wireless device 130 may have indicated to have the capability to reconfigure the one or more configuration parameters.

The one or more configuration parameters and/or the at least one changed configuration parameter may comprise at least one of: a message transmission parameter and a transport transmission parameter. In some embodiments, at least one of the following may apply: a) the message transmission parameter may be a CoAP parameter, and b) the transport transmission parameter may be a DTLS timer value. Further particularly, in some embodiments, the one or more configuration parameters and/or the at least one changed configuration parameter may comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

The receiving in this Action 204 may be performed using LwM2M. One of skill in the art may understand that younger or other protocols with similar functionality may be also used.

In some embodiments, wherein the receiving in this Action 204 may be performed using LwM2M, the another indication, may be a POST message. For example, the another indication may be a Sensor Markup Language (SenML) to indicate a change to the CoAP "ACK_TIMEOUT" to be better suited in an IEEE 802.15.4 network:

```
             Int: LS -> LC
             Req: PATCH coap://[IPv6]/coap-config
                 {"bn": "/XXXX/0/",
                 "e": [{"n": "0" "v": 123456}]
                 }
```

The wireless device 130 may only be configured to use the one or more configuration parameters based on a fixed rule, and the wireless device 130 may only be enabled to change any one of the one or more configuration parameters by receiving the another indication from the network node 110.

In some embodiments, the sending in Action 203 and the receiving in this Action 204 may be performed during a procedure of the wireless device 130 in the communications network 10 selected from: bootstrapping, device management, service enablement, and firmware update.

The receiving in this Action 204 may be performed over e.g., the first link 161.

### Action 205

As stated earlier, the indication may be understood to be a third indication and the another indication may be understood to be a fourth indication. In some embodiments, the wireless device 130, in this Action 205, may send a fifth indication to the network node 110. The fifth indication may confirm the reconfiguration of the wireless device 130 with the at least one changed configuration parameter. For example, the fifth indication may be a "2.04 Changed" response to indicate a successful change of the parameter:
Res: 2.04 Changed

The sending, in this Action 205 may be performed over e.g., the first link 161.

### Action 206

In this Action 206, the wireless device 130 may receive a sixth indication from the network node 110. The receiving in this Action 206 may be in response to sending the fifth indication in Action 205. The sixth indication may instruct the wireless device 130 to reboot. For example, the sixth indication may be a POST message on the "Reboot" resource to reboot the wireless device 130.

```
             Int: LS -> LC
             Req: POST coap://[IPv6]/coap-config/0/6
                  {"n": "11", "v" : " "}
```

The receiving in this Action 206 may be performed over e.g., the first link 161.

In some examples, even after performing Action 205, the wireless device 130 may keep using the old parameters in the current interactions, and use the new ones from the moment it reboots onwards.

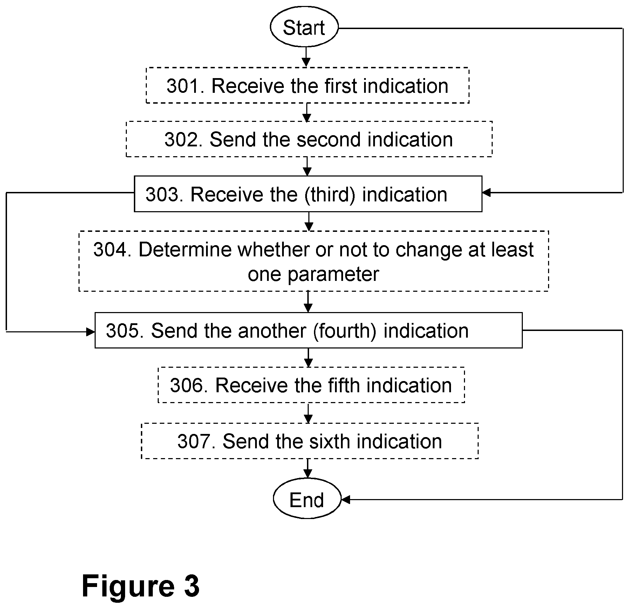

Embodiments of a method performed by the network node 110, will now be described with reference to the flowchart depicted in **Figure 3****.** The method may be understood to be for handling the configuration of the wireless device 130. The network node 110 operates in the communications network 10.

In some embodiments, the communications network 10 may operate on an Internet-of-Things technology.

The method may comprise one or more of the following actions. Several embodiments are comprised herein. In some embodiments all the actions may be performed. One or more embodiments may be combined, where applicable. All possible combinations are not described to simplify the description. It should be noted that the examples herein are not mutually exclusive. Components from one example may be tacitly assumed to be present in another example and it will be obvious to a person skilled in the art how those components may be used in the other examples. In Figure 3, optional actions 306 and 307 are indicated with dashed boxes.

The detailed description of some of the following corresponds to the same references provided above, in relation to the actions described for the network node 110, and will thus not be repeated here to simplify the description. For example, the network node 110 may be an LWM2M server. The network node 110 may run a host application capable of sharing its resources with a client application run by the wireless device 130, which may be a constrained device.

### Action 301

In this Action 301, the network node 110 receives the first indication from the wireless device 130. The first indication may indicate the capability, of the wireless device 130, to reconfigure the one or more configuration parameters of the wireless device 130 in the communications network 10, based on an instruction from the network node 110. As described earlier, in some examples, the network node 110 may receive the first indication during the course of a Bootstrapping and Registration procedures, as e.g., specified by the OMA DM - LWM2M.

The receiving in this Action 301 may be performed, e.g., via the first link 161.

### Action 302

In some embodiments, the network node 110 may, in this Action 302, send, the second indication to the wireless device 130 in response to receiving 301 the first indication. The second indication may indicate the request to provide the one or more configuration parameters.

The sending in this Action 302 may be performed, e.g., via the first link 161.

### Action 303

The network node 110, in this Action 303, receives the indication from the wireless device 130 operating in the communications network 10. The indication comprises the configuration object in CoAP. The configuration object comprises the one or more configuration parameters of the wireless device 130 in the communications network 10.

As stated earlier, the indication may be considered a third indication.

The indication may be received in a 2.05 content response.

The receiving in this Action 303 may be performed using LwM2M.

The one or more configuration parameters may comprise at least one of: a message transmission parameter and a transport transmission parameter. In some embodiments, the message transmission parameter may be a CoAP parameter, and/or the transport transmission parameter may be a Datagram Transport Layer Security (DTLS) timer value.

In some particular embodiments, the one or more configuration parameters may comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

The configuration object may further comprise the one or more object links to one or more existing configuration parameters in the one or more other configuration objects in the wireless device 130. In some embodiments, the one or more object links may be to the one or more existing configuration parameters comprising at least one of: Lifetime OL, Default Min Period OL, Default Max Period OL and Disable Timeout OL.

The receiving in this Action 303 may be performed using LwM2M.

The receiving, e.g., obtaining, in this Action 303 may be performed over e.g., the first link 161.

In some embodiments, the receiving in this Action 303 may be performed during a procedure of the wireless device 130 in the communications network 10 selected from: bootstrapping, device management, service enablement, and firmware update.

### Action 304

In this Action 304, the network node 110 determines, based on the received third indication, whether or not to change at least one configuration parameter. The determining in this Action 304 may be further based on one or more policies of the communications network 10 for the wireless device 130. The one or more policies may be understood as a set of one or more rules in the communications network 10. For example, the network node 110 may change the ACK_TIMEOUT to a value higher than the default 2 seconds, if the communications network 10 has high latency, in order to prevent unnecessary retransmissions. The one or more policies may even be arbitrary, assigning different bands to each device.

Determining may be understood as e.g., calculating.

### Action 305

In this Action 305, the network node 110 sends another indication to the wireless device 130. The another indication comprises the first instruction to configure the wireless device 130 to use the at least one changed configuration parameter of the one or more configuration parameters. The at least one changed configuration parameter is adapted to the one or more policies of the communications network 10 for the wireless device 130. The receiving in Action 303 and the sending in this Action 305 may be performed using the LwM2M protocol.

The sent another indication may be understood to be based on a result of the determination performed in Action 304.

The one or more configuration parameters and/or the at least one changed configuration parameter may comprise at least one of: a message transmission parameter and a transport transmission parameter. In some embodiments, at least one of the following may apply: a) the message transmission parameter may be a CoAP parameter, and b) the transport transmission parameter may be a DTLS timer value. Further particularly, in some embodiments, the one or more configuration parameters and/or the at least one changed configuration parameter may comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In some embodiments, the receiving in Action 303 and the sending in Action 305 may be performed during the procedure of the wireless device 130 in the communications network 10 selected from: bootstrapping, device management, service enablement, and firmware update.

As stated earlier, the indication may be the third indication, and the another indication may be the fourth indication.

The sending, e.g., providing, in this Action 305 may be performed over e.g., the first link 161.

As explained above, the wireless device 130 may only be configured to use the one or more configuration parameters based on a fixed rule, and the wireless device 130 may only be enabled to change any one of the one or more configuration parameters by receiving the another indication from the network node 110.

### Action 306

In this Action 306, the network node 110 may receive the fifth indication from the wireless device 130. The fifth indication may confirm the reconfiguration of the wireless device 130 with the at least one changed configuration parameter.

The receiving in this Action 306 may be performed over e.g., the first link 161.

### Action 307

In this Action 307, the network node 110 may send the sixth indication to the wireless device 130, in response to receiving the fifth indication in Action 306. The sixth indication may instruct the wireless device 130 to reboot.

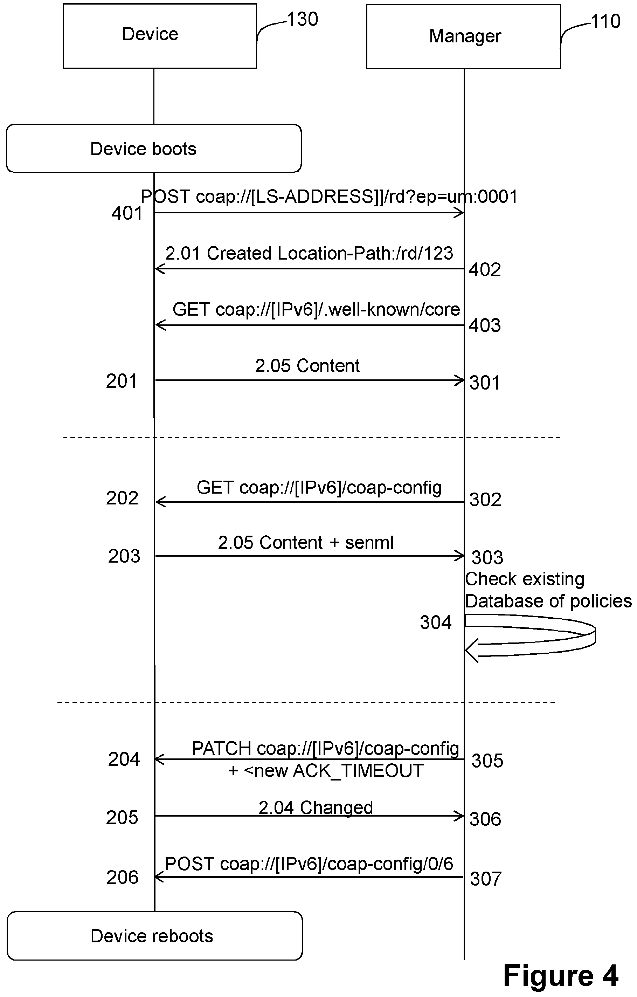

The methods just described as being implemented by the wireless device 130 and the network node 110 will now be described in further detail next, in relation to Figure 4, with a particular non-limiting example, wherein the general process of embodiments herein is tied to LwM2M Device (http://www.openmobilealliance.org/release/LightweightM2M/V1 1-20180710-A/HTML-Version/OMA-TS-LightweightM2M Core-V1 1-20180710-A.html) to manage this new resource and SenML (https://tools.ietf.org/html/rfc8428) to serialize it. **Figure 4** is a schematic diagram illustrating a non-limiting example of the methods that may be performed by the wireless device 130, which is an LWM2M Client denoted by "Device" in the non-limiting example of Figure 4, and the network node 110, is an LWM2M Server denoted by "Manager", and CoAP Client, in the non-limiting example of Figure 4. Similar setups may be arranged with YANG and RESTCONF, TR-69, or even SNMP. In the non-limiting example of Figure 4, the wireless device 130 is a constrained device in the communication network 10, which is a 3GPP network comprising the network node 110.

At 401, the wireless device 130 may start to perform LwM2M Bootstrapping and Registration procedures as specified by the OMA DM - LwM2M. As part of these procedures, the wireless device 130 sends a registration message, here, POST coap://[LS-ADDRESS]]/rd?ep=um:0001. The indication in this case is an End Point (EP) Name, which may be an IMEI. The LWM2M Bootstrapping and Registration procedures may also comprise, at 402, the network node 110 sending a 2.01 Created Location-Path:/rd/123. At 403, the network node 110 discovers whether the capability is available at the wireless device 130 by sending a GET coap://[IPv6]/.well-known/core:

```
             Int: LS -> LC
             Req: GET coap://[IPv6]/.well-known/core
```

In response, the wireless device 130 sends, in agreement with Action 201, the first indication to the network node 110 by returning a "2.05 Content" response with the contents of "/coap-config", which in this case is the object "LwM2M CoAP-Config":

```
             Res: 2.05 Content
                  </coap-config>;rt="oma.lwm2m";ct=110
```

The network node 110 receives the first indication according to Action 301. Then, the network node 110, in agreement with Action 302, performs a GET operation on that particular object:

```
             Int: LS -> LC
             Req: GET coap://[IPv6]/coap-config
```

The wireless device receives the second indication from the network node 110 according to Action 202. The wireless device 130 then returns, in agreement with Action 203, the third indication as a "2.05 Content" response with the following SenML, indicating the default CoAP protocol parameters expressed using the LwM2M object model, and serialized in SenML:

```
             Res: 2.05 Content
                 {"bn": "/XXXX/0/",
                   "e": [
                     {"n": "0", "v": 2},
                     {"n": "1", "v": 1.5},
                     {"n": "2", "v": 4},
                     {"n": "3" , "v": 1},
                     {"n": "4" , "v": 5},
                     {"n": "5", "v": 1},
                     {"n": "6", "v": 1}]
                 }
```

In agreement with Action 303, the network node 110 receives the third indication and, in agreement with Action 304, queries its internal database with device profiles, and searches for a suitable configuration, noticing that there is some congestion in the communications network 10 due to CoAP retransmissions. According to Action 305, the network node 110 sends the fourth indication by performing a POST operation to fine-tune the wireless device 130. For example, the SenML below changes the CoAP "ACK_TIMEOUT", which sets the maximum amount of time the wireless device 130 will wait until sending a retransmission, to be better suited in an IEEE 802.15.4 network:

```
             Int: LS -> LC
             Req: PATCH coap://[IPv6]/coap-config
                 {"bn": "/XXXX/0/",
                 "e": [{"n": "0","v": 123456}]
                 }
```

The wireless device 130 receives the fourth indication according to Action 204. In agreement with Action 205, the wireless device 130 then sends the fifth indication by responding with a "2.04 Changed" response to indicate a successful change of the parameter:

```
             Res: 2.04 Changed
```

The network node 110 receives the fifth indication in agreement with Action 306, and according to Action 307, it restarts the wireless device 130, sending the sixth indication by performing a POST operation on the "Restart" resource:

```
             Int: LS -> LC
             Req: POST coap://[IPv6]/coap-config/0/6
                 {"n": "11", "v": ""}
```

The wireless device 130 finally receives the sixth indication in agreement with Action 206, and reboots itself. Alternatively, the wireless device 130 may keep using the old parameters in the current interactions and use the new ones from that moment onwards.

As a general summarized overview of the foregoing, embodiments herein may be understood to provide a mechanism to modify one or more configuration parameters in a wireless device such as the wireless device 130, using LwM2M. Embodiments herein create a mechanism that allows to configure devices that use the LwM2M protocol, so that they may change configuration parameters to operate with higher efficiency in the communications network 10.

One advantage of embodiments herein is that they use CoAP, LwM2M and other standard protocols. Another advantage of embodiments herein is that they allow fine-tuning devices, preventing misconfiguration. Yet another advantage of embodiments herein is that they provide added security. A further advantage of embodiments herein is that they do not require a new logic on the CoAP endpoint. Yet another advantage of embodiments herein is that they work for device-to-device communication. Yet a further advantage of embodiments herein is that they enable the possibility to build "auto-tuning" capabilities on LwM2M systems. For example, the communications network 10 may comprise a large number of CoAP devices, comprising the wireless device 130, which may transmit very often. The network node 110 may be a LwM2M manager which may continuously measure the congestion on the communications network 10. The network node 110 may dynamically make adjustments to the CoAP_CONFIG. For example, it may detect that some confirmable messages have been lost and decide to increase the MAX_RETRANSMIT value to prevent that.

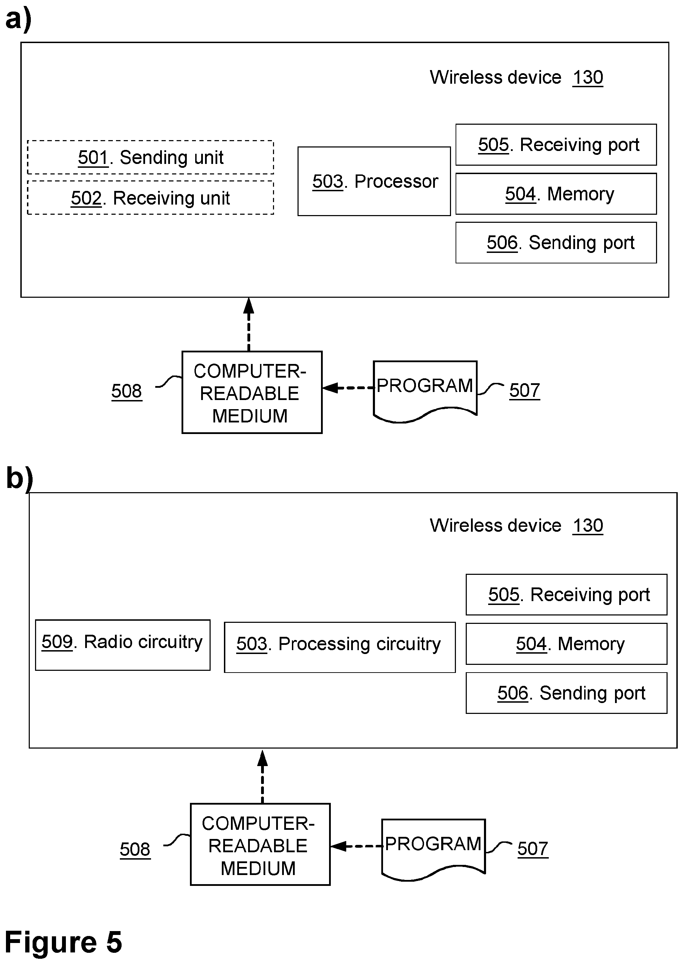

**Figure 5** depicts two different examples in panels a) and b), respectively, of the arrangement that the wireless device 130 may comprise to perform the method actions described above in relation to Figure 2. The wireless device 130 is configured to operate in the communications network 10.

The detailed description of some of the following corresponds to the same references provided above, in relation to the actions described for the wireless device 130, and will thus not be repeated here. For example, the wireless device 130 may be configured to be a constrained device.

In some embodiments, the wireless device 130 may comprise the following arrangement depicted in **Figure 5a****.**

The wireless device 130 is configured to, e.g. by means of a **sending unit 501** within the wireless device 130 configured to, send the indication to the network node 110 configured to operate in the communications network 10. The indication comprises the configuration object in CoAP. The configuration object is configured to comprise the one or more configuration parameters of the wireless device 130 in the communications network 10.

In some embodiments, the indication may be configured to be sent in a 2.05 content response.

The wireless device 130 is also configured to, e.g. by means of a **receiving unit 502** within the wireless device 130 configured to, receive the another indication from the network node 110. The another indication is configured to comprise the first instruction to configure the wireless device 130 to use the at least one changed configuration parameter of the one or more configuration parameters. The at least one changed configuration parameter is configured to be adapted to the one or more policies of the communications network 10 for the wireless device 130.

To send and to receive may be configured to be performed using the LwM2M protocol.

The wireless device 130 may only be configured to use the one or more configuration parameters based on a fixed rule, and the wireless device 130 may only be configured to be enabled to change any one of the one or more configuration parameters by receiving the another indication from the network node 110.

The one or more configuration parameters and/or the at least one changed configuration parameter may be configured to comprise at least one of: a message transmission parameter and a transport transmission parameter.

In some embodiments, at least one of the following may apply: a) the message transmission parameter may be configured to be a CoAP parameter, and b) the transport transmission parameter may be configured to be a Datagram Transport Layer Security, DTLS, timer value.

The one or more configuration parameters and/or the at least one changed configuration parameter may be configured to comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In some embodiments, the configuration object may be further configured to comprise one or more object links to one or more existing configuration parameters in one or more other configuration objects in the wireless device 130.

In some embodiments, the one or more object links may be configured to be to one or more existing configuration parameters configured to comprise at least one of: Lifetime OL, Default Min Period OL, Default Max Period OL and Disable Timeout OL.

In some embodiments, to send and to receive may be configured to be performed during a procedure of the wireless device 130 in the communications network 10 configured to be selected from: bootstrapping, device management, service enablement, and firmware update.

In some embodiments, the communications network 10 may be configured to operate on an Internet-of-Things technology.

In some embodiments, the wireless device 130 may be further configured to, e.g. by means of the sending unit 501 within the wireless device 130 configured to, send the first indication to the network node 110. The first indication may be configured to indicate the capability to reconfigure the one or more configuration parameters based on an instruction from the network node 110.

In some embodiments, the wireless device 130 may be further configured to, e.g. by means of the receiving unit 502 within the wireless device 130 configured to, receive the second indication from the network node 110 in response to sending the first indication. The second indication may be configured to indicate the request to provide the one or more configuration parameters. The indication may be configured to be the third indication. The another indication may be configured to be the fourth indication.

In some embodiment, the indication may be the third indication and the another indication may be the fourth indication. In some of such embodiments, the wireless device 130 may be further configured to, e.g. by means of the sending unit 501 within the wireless device 130 configured to, send the fifth indication to the network node 110. The fifth indication may be configured to confirm the reconfiguration of the wireless device 130 with the at least one changed configuration parameter.

In some embodiment, the indication may be configured to be the third indication and the another indication may be configured to be the fourth indication. In some of such embodiments, the wireless device 130 may be further configured to, e.g. by means of the receiving unit 502 within the wireless device 130 configured to, receive the sixth indication from the network node 110, in response to sending the fifth indication. The sixth indication may be configured to instruct the wireless device 130 to reboot.

The embodiments herein may be implemented through one or more processors, such as a **processor 503** in the wireless device 130 depicted in Figure 5a, together with computer program code for performing the functions and actions of the embodiments herein. The processor 503 may be understood herein to be a hardware component. The program code mentioned above may also be provided as a computer program product, for instance in the form of a data carrier carrying computer program code for performing the embodiments herein when being loaded into the in the wireless device 130. It is however feasible with other data carriers such as a memory stick. The computer program code may furthermore be provided as pure program code on a server and downloaded to the wireless device 130.

The wireless device 130 may further comprise a **memory 504** comprising one or more memory units. The memory 504 is arranged to be used to store obtained information, store data, configurations, schedulings, and applications etc. to perform the methods herein when being executed in the wireless device 130.

In some embodiments, the wireless device 130 may receive information from, e.g., the network node 110, through a **receiving port 505.** In some examples, the receiving port 505 may be, for example, connected to one or more antennas in wireless device 130. In other embodiments, the wireless device 130 may receive information from another structure in the communications network 10 through the receiving port 505. Since the receiving port 505 may be in communication with the processor 503, the receiving port 505 may then send the received information to the processor 503. The receiving port 505 may also be configured to receive other information.

The processor 503 in the wireless device 130 may be further configured to transmit or send information to e.g., the network node 110, through a **sending port 506,** which may be in communication with the processor 503, and the memory 504.

Any of the sending unit 501 and the receiving unit 502 may be the processor 503 of the wireless device 130, or an application running on such processor.

Those skilled in the art will also appreciate that the sending unit 501 and the receiving unit 502 described above may refer to a combination of analog and digital circuits, and/or one or more processors configured with software and/or firmware, e.g., stored in memory, that, when executed by the one or more processors such as the processor 503, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Thus, the methods according to the embodiments described herein for the wireless device 130 may be respectively implemented by means of a **computer program 507** product, comprising instructions, i.e., software code portions, which, when executed on at least one processor 503, cause the at least one processor 503 to carry out the actions described herein, as performed by the wireless device 130. The computer program 507 product may be stored on a **computer-readable storage medium 508.** The computer-readable storage medium 508, having stored thereon the computer program 507, may comprise instructions which, when executed on at least one processor 503, cause the at least one processor 503 to carry out the actions described herein, as performed by the wireless device 130. In some embodiments, the computer-readable storage medium 508 may be a non-transitory computer-readable storage medium, such as memory stick, or stored in the cloud space. In other embodiments, the computer program 507 product may be stored on a carrier containing the computer program, wherein the carrier is one of an electronic signal, optical signal, radio signal, or the computer-readable storage medium 508, as described above.

The wireless device 130 may comprise an interface unit to facilitate communications between the wireless device 130 and other nodes or devices, e.g., the network node 110. In some particular examples, the interface may, for example, include a transceiver configured to transmit and receive radio signals over an air interface in accordance with a suitable standard.

In other embodiments, the wireless device 130 may comprise the following arrangement depicted in **Figure 5b****.** The wireless device 130 may comprise a **processing circuitry 503,** e.g., one or more processors such as the processor 503, in the wireless device 130 and the memory 504. The wireless device 130 may also comprise a **radio circuitry 509,** which may comprise e.g., the receiving port 505 and the sending port 506. The processing circuitry 503 may be configured to, or operable to, perform the method actions according to Figure 2 and/or Figure 4, in a similar manner as that described in relation to Figure 5a. The radio circuitry 509 may be configured to set up and maintain at least a wireless connection with the network node 110 and/or the radio network node 140. Circuitry may be understood herein as a hardware component.

Hence, embodiments herein also relate to the wireless device 130 operative to operate in the communications network 10. The wireless device 130 may comprise the processing circuitry 503 and the memory 504, said memory 504 containing instructions executable by said processing circuitry 503, whereby the wireless device 130 is further operative to perform the actions described herein in relation to the wireless device 130, e.g., in Figure 2 and/or Figure 4.

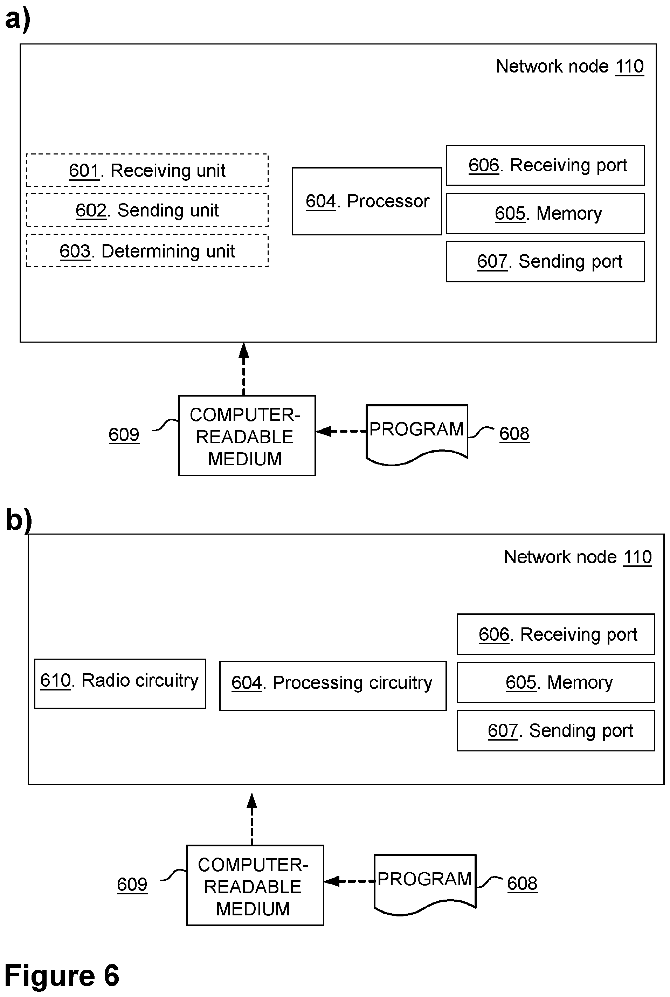

**Figure 6** depicts two different examples in panels a) and b), respectively, of the arrangement that the network node 110 may comprise to perform the method actions described above in relation to Figure 3. The network node 110 is configured to operate in the communications network 10.

The detailed description of some of the following corresponds to the same references provided above, in relation to the actions described for the network node 110, and will thus not be repeated here. For example, the wireless communications network 10 may be configured to operate on an Internet-of-Things technology.

The network node 110 is configured to, e.g. by means of a **receiving unit 601** within the network node 110 configured to, receive the indication to from the wireless device 130 configured to operate in the communications network 10. The indication is configured to comprise the configuration object in CoAP. The configuration object is configured to comprise the one or more configuration parameters of the wireless device 130 in the communications network 10.

In some embodiments, the indication may be configured to be received in a 2.05 content response.

The network node 110 is also configured to, e.g. by means of a **sending unit 602** within the network node 110 configured to, send the another indication to the wireless device 130. The another indication is configured to comprise the first instruction to configure the wireless device 130 to use the at least one changed configuration parameter of the one or more configuration parameters. The at least one changed configuration parameter is configured to be adapted to the one or more policies of the communications network 10 for the wireless device 130.

To receive and to send may be configured to be performed using the LwM2M protocol.

In some embodiments, the wireless device 130 may only be configured to use the one or more configuration parameters based on a fixed rule, and the wireless device 130 may only be configured to be enabled change any one of the one or more configuration parameters by receiving the another indication from the network node 110.

The one or more configuration parameters and/or the at least one changed configuration parameter may be configured to comprise at least one of: a message transmission parameter and a transport transmission parameter.

In some embodiments, at least one of the following may apply: a) the message transmission parameter may be configured to be a CoAP parameter, and b) the transport transmission parameter may be configured to be a Datagram Transport Layer Security, DTLS, timer value.

The one or more configuration parameters and/or the at least one changed configuration parameter may be configured to comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER.

In some embodiments, the configuration object may be further configured to comprise one or more object links to one or more existing configuration parameters in one or more other configuration objects in the wireless device 130.

In some embodiments, the one or more object links may be configured to be to one or more existing configuration parameters configured to comprise at least one of: Lifetime OL, Default Min Period OL, Default Max Period OL and Disable Timeout OL.

In some embodiments, to receive and to send may be configured to be performed during the procedure of the wireless device 130 in the communications network 10 configured to be selected from: bootstrapping, device management, service enablement, and firmware update.

In some embodiments, the wireless device 130 may be configured to be a constrained device.

In some embodiments, the network node 110 may be further configured to, e.g. by means of the receiving unit 601 within the network node 110 configured to, receive the first indication from the wireless device 130. The first indication may be configured to indicate the capability to reconfigure the one or more configuration parameters based on an instruction from the network node 110.

In some embodiments, the network node 110 may be further configured to, e.g. by means of the sending unit 602 within the network node 110 configured to, send the second indication to the wireless device 130 in response to receiving the first indication. The second indication may be configured to indicate the request to provide the one or more configuration parameters. The indication may be configured to be the third indication. The another indication may be configured to be the fourth indication.

In some embodiment, the indication may be configured to be the third indication and the another indication may be configured to be the fourth indication. In some of such embodiments, the network node 110 may be further configured to, e.g. by means of the receiving unit 601 within the network node 110 configured to, receive the fifth indication from the wireless device 130. The fifth indication may be configured to confirm the reconfiguration of the wireless device 130 with the at least one changed configuration parameter.

In some embodiment, the indication may be configured to be the third indication and the another indication may be configured to be the fourth indication. In some of such embodiments, the network node 110 may be further configured to, e.g. by means of the sending unit 602 within the network node 110 configured to, send the sixth indication to the wireless device 130, in response to receiving the fifth indication. The sixth indication may be configured to instruct the wireless device 130 to reboot.

In some embodiment, the indication may be configured to be the third indication. In some of such embodiments, the network node 110 may be also configured to, e.g. by means of a **determining unit 603** within the network node 110 configured to, determine, based on the third indication configured to be received, whether or not to change the at least one configuration parameter. The determining may be configured to be further based on the one or more policies of the communications network 10 for the wireless device 130.

The embodiments herein may be implemented through one or more processors, such as a **processor 604** in the network node 110 depicted in Figure 6, together with computer program code for performing the functions and actions of the embodiments herein. The processor 604 may be understood herein to be a hardware component. The program code mentioned above may also be provided as a computer program product, for instance in the form of a data carrier carrying computer program code for performing the embodiments herein when being loaded into the in the network node 110. One such carrier may be the cloud 120. It is however feasible with other data carriers such as a memory stick. The computer program code may furthermore be provided as pure program code on a server and downloaded to the network node 110.

The network node 110 may further comprise a **memory 605** comprising one or more memory units. The memory 605 is arranged to be used to store obtained information, store data, configurations, schedulings, and applications etc. to perform the methods herein when being executed in the network node 110.

In some embodiments, the network node 110 may receive information from, e.g., the wireless device 130, through a **receiving port 606.** In some examples, the receiving port 606 may be, for example, connected to one or more antennas in the network node 110. In other embodiments, the network node 110 may receive information from another structure in the communications network 10 through the receiving port 606. Since the receiving port 606 may be in communication with the processor 604, the receiving port 606 may then send the received information to the processor 604. The receiving port 606 may also be configured to receive other information.

The processor 604 in the network node 110 may be further configured to transmit or send information to e.g., the wireless device 130, through a **sending port 607,** which may be in communication with the processor 604, and the memory 605.

Any of the receiving unit 601, the sending unit 602 and the determining unit 603 may be the processor 604 of the network node 110, or an application running on such processor.

Those skilled in the art will also appreciate that the receiving unit 601, the sending unit 602 and the determining unit 603 described above may refer to a combination of analog and digital circuits, and/or one or more processors configured with software and/or firmware, e.g., stored in memory, that, when executed by the one or more processors such as the processor 604, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Thus, the methods according to the embodiments described herein for the network node 110 may be respectively implemented by means of a **computer program 608** product, comprising instructions, i.e., software code portions, which, when executed on at least one processor 604, cause the at least one processor 604 to carry out the actions described herein, as performed by the network node 110. The computer program 608 product may be stored on a **computer-readable storage medium 609.** The computer-readable storage medium 609, having stored thereon the computer program 608, may comprise instructions which, when executed on at least one processor 604, cause the, at least, one processor 604 to carry out the actions described herein, as performed by the network node 110. In some embodiments, the computer-readable storage medium 609 may be a non-transitory computer-readable storage medium, such as a memory stick, or stored in the cloud space. In other embodiments, the computer program 608 product may be stored on a carrier containing the computer program, wherein the carrier is one of an electronic signal, optical signal, radio signal, or the computer-readable storage medium 609, as described above.

The network node 110 may comprise an interface unit to facilitate communications between the network node 110 and other nodes or devices, e.g., the network node 110. In some particular examples, the interface may, for example, include a transceiver configured to transmit and receive radio signals over an air interface in accordance with a suitable standard.

In other embodiments, the network node 110 may comprise the following arrangement depicted in **Figure 6b****.** The network node 110 may comprise a **processing circuitry 604,** e.g., one or more processors such as the processor 604, in the network node 110 and the memory 605. The network node 110 may also comprise a **radio circuitry 610,** which may comprise e.g., the receiving port 606 and the sending port 607. The processing circuitry 604 may be configured to, or operable to, perform the method actions according to Figure 3 and/or Figure 4, in a similar manner as that described in relation to Figure 6a. The radio circuitry 610 may be configured to set up and maintain at least a wireless connection with the wireless device 130. Circuitry may be understood herein as a hardware component.

Hence, embodiments herein also relate to the network node 110 operative to operate in the communications network 10. The network node 110 may comprise the processing circuitry 604 and the memory 605, said memory 605 containing instructions executable by said processing circuitry 604, whereby the network node 110 is further operative to perform the actions described herein in relation to the network node 110, e.g., in Figure 3 and/or Figure 4.

When using the word "comprise" or "comprising", it shall be interpreted as non-limiting, i.e. meaning "consist at least of".

The embodiments herein are not limited to the above described preferred embodiments. Various alternatives, modifications and equivalents are possible, provided that they do not depart from the scope of the claims.

As used herein, the expression "in some embodiments" has been used to indicate that the features of the embodiment described may be combined with any other embodiment or example disclosed herein.

As used herein, the expression "in some examples" has been used to indicate that the features of the example described may be combined with any other embodiment or example disclosed herein.

## Claims

1. A method performed by a wireless device (130), the wireless device (130) operating in a communications network (10), the method comprising:
- sending (201) a first indication to a network node (110), the first indication indicating a capability to reconfigure one or more configuration parameters based on an instruction from the network node (110), and
- receiving (202) a second indication from the network node (110) in response to sending (201) the first indication, the second indication indicating a request to provide the one or more configuration parameters,
- *sending* (203) a third indication to the network node (110) operating in the communications network (10), the third indication comprising a configuration object in Constrained Application Protocol, CoAP, the configuration object comprising the one or more configuration parameters of the wireless device (130) in the communications network (10), and
- *receiving* (204) a fourth indication from the network node (110), the fourth indication comprising a first instruction to configure the wireless device (130) to use at least one changed configuration parameter of the one or more configuration parameters, the at least one changed configuration parameter being adapted to one or more policies of the communications network (10) for the wireless device (130).

2. A method performed by a network node (110), the network node (110) operating in a communications network (10), the method comprising:
- receiving (301) a first indication from a wireless device (130), the first indication indicating a capability to reconfigure one or more configuration parameters based on an instruction from the network node (110), and
- sending (302) a second indication to the wireless device in response to receiving (301) the first indication, the second indication indicating a request to provide the one or more configuration parameters,
- *receiving* (303) a third indication from the wireless device (130) operating in the communications network (10), the third indication comprising a configuration object in Constrained Application Protocol, CoAP, the configuration object comprising the one or more configuration parameters of the wireless device (130) in the communications network (10),
- *sending* (305) a fourth indication to the wireless device (130), the fourth indication comprising a first instruction to configure the wireless device (130) to use at least one changed configuration parameter of the one or more configuration parameters, the at least one changed configuration parameter being adapted to one or more policies of the communications network (10) for the wireless device (130).

3. A wireless device (130) configured to operate in a communications network (10), the wireless device (130) being further configured to:
- send a first indication to a network node (110), the first indication indicating a capability to reconfigure one or more configuration parameters based on an instruction from the network node (110), and
- receive a second indication from the network node (110) in response to sending (201) the first indication, the second indication indicating a request to provide the one or more configuration parameters,
- send a third indication to the network node (110) configured to operate in the communications network (10), the third indication comprising a configuration object in Constrained Application Protocol, CoAP, the configuration object being configured to comprise the one or more configuration parameters of the wireless device (130) in the communications network (10), and
- receive a fourth indication from the network node (110), the fourth indication comprising a first instruction to configure the wireless device (130) to use at least one changed configuration parameter of the one or more configuration parameters, the at least one changed configuration parameter being configured to be adapted to one or more policies of the communications network (10) for the wireless device (130).

4. The wireless device (130) according to claim 3, wherein the one or more configuration parameters and/or the at least one changed configuration parameter are configured to comprise at least one of: a message transmission parameter and a transport transmission parameter.

5. The wireless device (130) according to claim 4, wherein at least one of:
a. the message transmission parameter is configured to be a CoAP parameter, and
b. the transport transmission parameter is configured to be a Datagram Transport Layer Security, DTLS, timer value.

6. The wireless device (130) according to any of claims 3-5, wherein the one or more configuration parameters and/or the at least one changed configuration parameter are configured to comprise at least one of: CoAP-CONFIG*, instance_number, ACK_TIMEOUT, ACK_RANDOM_FACTOR, MAX_RETRANSMIT, NSTART, DEFAULT_LEISURE, PROBING_RATE, and DTLS_RETRANSMISSION_TIMER, wherein CoAP-CONFIG* comprises CoAP parameters that can modified by the network node (110);
instance_number is a number used to differentiate from other instances of the same object;
ACK_TIMEOUT designate the time the network node (110) waits until the reboot is executed; and
ACK_RANDOM_FACTOR, MAX_RETRANSMIT, NSTART, DEFAULT_LEISURE, PROBING_RATE, and DTLS_RETRANSMISSION_TIMER refer to values specified in CoAP.

7. The wireless device (130) according to any of claims 3-6, wherein the configuration object is further configured to comprise one or more configuration parameters from LwM2M specification, presented as one or more object links, to one or more existing configuration parameters in one or more other configuration objects in the wireless device (130).

8. The wireless device (130) according to claim 7, wherein the one or more object links are configured to be to one or more existing configuration parameters configured to comprise at least one of: Lifetime OL, Default Min Period OL, Default Max Period OL and Disable Timeout OL, wherein Lifetime OL, Default Min Period OL and Default Max Period OL refer to a value specified in LwM2M.

9. The wireless device (130) according to any of claims 3-8, wherein to send and to receive are configured to be performed during a procedure of the wireless device (130) in the communications network (10) selected from: bootstrapping, device management, service enablement, and firmware update.

10. The wireless device (130) according to any of claims 3-9, wherein to send and to receive are configured to be performed using a Lightweight Machine to Machine, LwM2M, protocol.

11. The wireless device (130) according to any of claims 3-10, wherein the communications network (10) is configured to operate on an Internet-of-Things technology.

12. The wireless device (130) according to any of claims 3-11, wherein the wireless device (130) is configured to be a constrained device.

13. A network node (110) configured to operate in a communications network (10), the network node (110) being further configured to:
- receive a first indication from a wireless device (130), the first indication being configured to indicate a capability to reconfigure one or more configuration parameters based on an instruction from the network node (110),
- send a second indication to the wireless device (130) in response to receiving the first indication, the second indication being configured to indicate a request to provide the one or more configuration parameters,
- receive a third indication from the wireless device (130) configured to operate in the communications network (10), the third indication comprising a configuration object in Constrained Application Protocol, CoAP, the configuration object being configured to comprise the one or more configuration parameters of the wireless device (130) in the communications network (10),
- send a fourth indication to the wireless device (130), the fourth indication comprising a first instruction to configure the wireless device (130) to use at least one changed configuration parameter of the one or more configuration parameters, the at least one changed configuration parameter being configured to be adapted to one or more policies of the communications network (10) for the wireless device (130).

14. A computer program (507, 608), comprising instructions which, when executed on at least one processor (503, 604), cause the at least one processor (503, 604) to carry out the method according to claims 1 or 2.

15. A computer-readable storage medium (508, 609), having stored thereon a computer program (507, 608), comprising instructions which, when executed on at least one processor (503, 604), cause the at least one processor (503, 604) to carry out the method according to any one of claims 1 or 2.

## Patentansprüche

1. Verfahren, das von einer drahtlosen Vorrichtung (130) durchgeführt wird, wobei die drahtlose Vorrichtung (130) in einem Kommunikationsnetzwerk (10) operiert, wobei das Verfahren Folgendes umfasst:
- Senden (201) einer ersten Angabe an einen Netzwerkknoten (110), wobei die erste Angabe eine Fähigkeit zum Rekonfigurieren eines oder mehrerer Konfigurationsparameter basierend auf einer Anweisung von dem Netzwerkknoten (110) angibt, und
- Empfangen (202) einer zweiten Angabe von dem Netzwerkknoten (110) in Reaktion auf das Senden (201) der ersten Angabe, wobei die zweite Angabe eine Anforderung zum Bereitstellen des einen oder der mehreren Konfigurationsparameter angibt,
- Senden (203) einer dritten Angabe an den Netzwerkknoten (110), der in dem Kommunikationsnetzwerk (10) operiert, wobei die dritte Angabe ein Konfigurationsobjekt in Constrained Application Protocol, CoAP, umfasst, wobei das Konfigurationsobjekt den einen oder die mehreren Konfigurationsparameter der drahtlosen Vorrichtung (130) in dem Kommunikationsnetzwerk (10) umfasst, und
- Empfangen (204) einer vierten Angabe von dem Netzwerkknoten (110), wobei die vierte Angabe eine erste Anweisung zum Konfigurieren der drahtlosen Vorrichtung (130) umfasst, um mindestens einen Konfigurationsparameter des einen oder der mehreren Konfigurationsparameter zu verwenden, wobei der mindestens eine geänderte Konfigurationsparameter an eine oder mehrere Richtlinien des Kommunikationsnetzwerks (10) für die drahtlose Vorrichtung (130) angepasst ist.

2. Verfahren, das von einem Netzwerkknoten (110) durchgeführt wird, wobei der Netzwerkknoten (110) in einem Kommunikationsnetzwerk (10) operiert, wobei das Verfahren Folgendes umfasst:
- Empfangen (301) einer ersten Angabe von einer drahtlosen Vorrichtung (130), wobei die erste Angabe eine Fähigkeit zum Rekonfigurieren eines oder mehrerer Konfigurationsparameter basierend auf einer Anweisung von dem Netzwerkknoten (110) angibt, und
- Senden (302) einer zweiten Angabe an die drahtlose Vorrichtung in Reaktion auf das Empfangen (301) der ersten Angabe, wobei die zweite Angabe eine Anforderung zum Bereitstellen des einen oder der mehreren Konfigurationsparameter angibt,
- Empfangen (303) einer dritten Angabe von der drahtlosen Vorrichtung (130), die in dem Kommunikationsnetzwerk (10) operiert, wobei die dritte Angabe ein Konfigurationsobjekt in Constrained Application Protocol, CoAP, umfasst, wobei das Konfigurationsobjekt den einen oder die mehreren Konfigurationsparameter der drahtlosen Vorrichtung (130) in dem Kommunikationsnetzwerk (10) umfasst,
- Senden (305) einer vierten Angabe an die drahtlose Vorrichtung (130), wobei die vierte Angabe eine erste Anweisung zum Konfigurieren der drahtlosen Vorrichtung (130) umfasst, um mindestens einen Konfigurationsparameter des einen oder der mehreren Konfigurationsparameter zu verwenden, wobei der mindestens eine geänderte Konfigurationsparameter an eine oder mehrere Richtlinien des Kommunikationsnetzwerks (10) für die drahtlose Vorrichtung (130) angepasst ist.

3. Drahtlose Vorrichtung (130), die für Betrieb in einem Kommunikationsnetzwerk (10) konfiguriert ist, wobei die drahtlose Vorrichtung (130) ferner zu Folgendem konfiguriert ist:
- Senden einer ersten Angabe an einen Netzwerkknoten (110), wobei die erste Angabe eine Fähigkeit zum Rekonfigurieren eines oder mehrerer Konfigurationsparameter basierend auf einer Anweisung von dem Netzwerkknoten (110) angibt,
und
- Empfangen einer zweiten Angabe von dem Netzwerkknoten (110) in Reaktion auf das Senden (201) der ersten Angabe, wobei die zweite Angabe eine Anforderung zum Bereitstellen des einen oder der mehreren Konfigurationsparameter angibt,
- Senden einer dritten Angabe an den Netzwerkknoten (110), der für Betrieb in dem Kommunikationsnetzwerk (10) konfiguriert ist, wobei die dritte Angabe ein Konfigurationsobjekt in Constrained Application Protocol, CoAP, umfasst, wobei das Konfigurationsobjekt so konfiguriert ist, dass es den einen oder die mehreren Konfigurationsparameter der drahtlosen Vorrichtung (130) in dem Kommunikationsnetzwerk (10) umfasst, und
- Empfangen einer vierten Angabe von dem Netzwerkknoten (110), wobei die vierte Angabe eine erste Anweisung zum Konfigurieren der drahtlosen Vorrichtung (130) umfasst, um mindestens einen Konfigurationsparameter des einen oder der mehreren Konfigurationsparameter zu verwenden, wobei der mindestens eine geänderte Konfigurationsparameter so konfiguriert ist, dass er an eine oder mehrere Richtlinien des Kommunikationsnetzwerks (10) für die drahtlose Vorrichtung (130) angepasst ist.

4. Drahtlose Vorrichtung (130) nach Anspruch 3, wobei der eine oder die mehreren Konfigurationsparameter und/oder der mindestens eine geänderte Konfigurationsparameter so konfiguriert sind, dass sie mindestens einen von folgenden umfassen: einen Nachrichtenübertragungsparameter und einen Transportübertragungsparameter.

5. Drahtlose Vorrichtung (130) nach Anspruch 4, wobei mindestens eines von Folgendem:
a. der Nachrichtenübertragungsparameter ist als CoAP-Parameter konfiguriert und
b. der Transportübertragungsparameter ist als Datagram Transport Layer Security-Zeitgeberwert, DTLS-Zeitgeberwert, konfiguriert.

6. Drahtlose Vorrichtung (130) nach einem der Ansprüche 3-5, wobei der eine oder die mehreren Konfigurationsparameter und/oder der mindestens eine geänderte Konfigurationsparameter so konfiguriert sind, dass sie mindestens eines von Folgendem umfassen: CoAP-CONFIG*, instance_number, ACK_TIMEOUT, ACK_RANDOM_FACTOR, MAX_RETRANSMIT, NSTART, DEFAULT_LEISURE, PROBING_RATE und DTLS_RETRANSMISSION_TIMER,
wobei CoAP-CONFIG* CoAP-Parameter umfasst, die von dem Netzwerkknoten (110) modifiziert werden können;
Instanznummer eine Nummer ist, die zur Differenzierung von anderen Instanzen desselben Objekts verwendet wird;
ACK_TIMEOUT festlegt, dass der Netzwerkknoten (110) wartet, bis der Neustart ausgeführt wird; und
ACK_RANDOM_FACTOR, MAX_RETRANSMIT, NSTART, DEFAULT_LEISURE, PROBING_RATE und DTLS_RETRANSMISSION_TIMER sich auf Werte beziehen, die in CoAP spezifiziert sind.

7. Drahtlose Vorrichtung (130) nach einem der Ansprüche 3-6, wobei das Konfigurationsobjekt ferner so konfiguriert ist, dass es einen oder mehrere Konfigurationsparameter aus einer LwM2M-Spezifikation umfasst, die als ein oder mehrere Objektlinks zu einem oder mehreren Konfigurationsparametern in einem oder mehreren anderen Konfigurationsobjekten in der drahtlosen Vorrichtung (130) dargestellt sind.

8. Drahtlose Vorrichtung (130) nach Anspruch 7, wobei der eine oder die mehreren Objektlinks als ein oder mehrere bestehende Konfigurationsparameter konfiguriert sind, die so konfiguriert sind, dass sie mindestens eines von Folgendem umfassen: Lifetime OL, Default Min Period OL, Default Max Period OL und Disable Timeout OL, wobei Lifetime OL, Default Min Period OL und Default Max Period OL sich auf einen Wert beziehen, der in LwM2M spezifiziert ist.

9. Drahtlose Vorrichtung (130) nach einem der Ansprüche 3-8, wobei das Senden und Empfangen so konfiguriert ist, dass es während einer Prozedur der drahtlosen Vorrichtung (130) in dem Kommunikationsnetzwerk (10) durchgeführt wird, die aus Folgenden ausgewählt wird: Bootstrapping, Vorrichtungsverwaltung, Dienstaktivierung und Firmwareaktualisierung.

10. Drahtlose Vorrichtung (130) nach einem der Ansprüche 3-9, wobei das Senden und Empfangen so konfiguriert ist, dass es unter Verwendung eines Lightweight-Machine-to-Machine-Protokolls, LwM2M-Protokolls, durchgeführt wird.

11. Drahtlose Vorrichtung (130) nach einem der Ansprüche 3-10, wobei das Kommunikationsnetzwerk (10) für Betrieb auf Basis einer Internet-of-Things-Technologie konfiguriert ist.

12. Drahtlose Vorrichtung (130) nach einem der Ansprüche 3-11, wobei die drahtlose Vorrichtung (130) eine eingeschränkte Vorrichtung ist.

13. Netzwerkknoten (110), der für Betrieb in einem Kommunikationsnetzwerk (10) konfiguriert ist, wobei der Netzwerkknoten (110) ferner zu Folgendem konfiguriert ist:
- Empfangen einer ersten Angabe von einer drahtlosen Vorrichtung (130), wobei die erste Angabe so konfiguriert ist, dass sie eine Fähigkeit zum Rekonfigurieren eines oder mehrerer Konfigurationsparameter basierend auf einer Anweisung von dem Netzwerkknoten (110) angibt,
- Senden einer zweiten Angabe an die drahtlose Vorrichtung (130) in Reaktion auf das Empfangen der ersten Angabe, wobei die zweite Angabe so konfiguriert ist, dass sie eine Anforderung zum Bereitstellen des einen oder der mehreren Konfigurationsparameter angibt,
- Empfangen einer dritten Angabe von der drahtlosen Vorrichtung (130), die für Betrieb in dem Kommunikationsnetzwerk (10) konfiguriert ist, wobei die dritte Angabe ein Konfigurationsobjekt in Constrained Application Protocol, CoAP, umfasst, wobei das Konfigurationsobjekt so konfiguriert ist, dass es den einen oder die mehreren Konfigurationsparameter der drahtlosen Vorrichtung (130) in dem Kommunikationsnetzwerk (10) umfasst,
- Senden einer vierten Angabe an die drahtlose Vorrichtung (130), wobei die vierte Angabe eine erste Anweisung zum Konfigurieren der drahtlosen Vorrichtung (130) umfasst, um mindestens einen Konfigurationsparameter des einen oder der mehreren Konfigurationsparameter zu verwenden, wobei der mindestens eine geänderte Konfigurationsparameter so konfiguriert ist, dass er an eine oder mehrere Richtlinien des Kommunikationsnetzwerks (10) für die drahtlose Vorrichtung (130) angepasst ist.

14. Computerprogramm (507, 608), umfassend Anweisungen, die bei Ausführung auf mindestens einem Prozessor (503, 604) den mindestens einen Prozessor (503, 604) zum Durchführen des Verfahrens nach einem der Ansprüche 1 oder 2 veranlassen.

15. Computerlesbares Speichermedium (508, 609) mit einem darauf gespeicherten Computerprogramm (507, 608), das Anweisungen umfasst, die bei Ausführung auf mindestens einem Prozessor (503, 604) den mindestens einen Prozessor (503, 604) zum Durchführen des Verfahrens nach einem der Ansprüche 1 oder 2 veranlassen.

## Revendications

1. Procédé réalisé par un dispositif sans fil (130), le dispositif sans fil (130) fonctionnant dans un réseau de communication (10), le procédé comprenant :
- l'envoi (201) d'une première indication à un nœud de réseau (110), la première indication indiquant une capacité à reconfigurer un ou plusieurs paramètres de configuration sur la base d'une instruction émanant du nœud de réseau (110), et
- la réception (202) d'une deuxième indication depuis le nœud de réseau (110) en réponse à l'envoi (201) de la première indication, la deuxième indication indiquant une demande de fournir le ou les paramètres de configuration,
- l'envoi (203) d'une troisième indication au nœud de réseau (110) fonctionnant dans le réseau de communication (10), la troisième indication comprenant un objet de configuration dans Constrained Application Protocol, CoAP, l'objet de configuration comprenant le ou les paramètres de configuration du dispositif sans fil (130) dans le réseau de communication (10), et
- la réception (204) d'une quatrième indication depuis le nœud de réseau (110), la quatrième indication comprenant une première instruction de configurer le dispositif sans fil (130) pour utiliser au moins un paramètre de configuration modifié parmi le ou les paramètres de configuration, le ou les paramètres de configuration modifiés étant adaptés à une ou plusieurs politiques du réseau de communication (10) pour le dispositif sans fil (130).

2. Procédé réalisé par un nœud de réseau (110), le nœud de réseau (110) fonctionnant dans un réseau de communication (10), le procédé comprenant :
- la réception (301) d'une première indication depuis un dispositif sans fil (130), la première indication indiquant une capacité à reconfigurer un ou plusieurs paramètres de configuration sur la base d'une instruction émanant du nœud de réseau (110), et
- l'envoi (302) d'une deuxième indication au dispositif sans fil en réponse à la réception (301) de la première indication, la deuxième indication indiquant une demande de fournir le ou les paramètres de configuration,
- la réception (303) d'une troisième indication depuis le dispositif sans fil (130) fonctionnant dans le réseau de communication (10), la troisième indication comprenant un objet de configuration dans Constrained Application Protocol, CoAP, l'objet de configuration comprenant le ou les paramètres de configuration du dispositif sans fil (130) dans le réseau de communication (10),
- l'envoi (305) d'une quatrième indication au dispositif sans fil (130), la quatrième indication comprenant une première instruction de configurer le dispositif sans fil (130) pour utiliser au moins un paramètre de configuration modifié parmi le ou les paramètres de configuration, le ou les paramètres de configuration modifiés étant adaptés à une ou plusieurs politiques du réseau de communication (10) pour le dispositif sans fil (130).

3. Dispositif sans fil (130) configuré pour fonctionner dans un réseau de communication (10), le dispositif sans fil (130) étant en outre configuré pour :
- envoyer une première indication à un nœud de réseau (110), la première indication indiquant une capacité à reconfigurer un ou plusieurs paramètres de configuration sur la base d'une instruction émanant du nœud de réseau (110), et
- recevoir une deuxième indication depuis le nœud de réseau (110) en réponse à l'envoi (201) de la première indication, la deuxième indication indiquant une demande de fournir le ou les paramètres de configuration,
- envoyer une troisième indication au nœud de réseau (110) configuré pour fonctionner dans le réseau de communication (10), la troisième indication comprenant un objet de configuration dans Constrained Application Protocol, CoAP, l'objet de configuration étant configuré pour comprendre le ou les paramètres de configuration du dispositif sans fil (130) dans le réseau de communication (10), et
- recevoir une quatrième indication depuis le nœud de réseau (110), la quatrième indication comprenant une première instruction de configurer le dispositif sans fil (130) pour utiliser au moins un paramètre de configuration modifié parmi le ou les paramètres de configuration, le ou les paramètres de configuration modifiés étant configurés pour être adaptés à une ou plusieurs politiques du réseau de communication (10) pour le dispositif sans fil (130).

4. Dispositif sans fil (130) selon la revendication 3, dans lequel le ou les paramètres de configuration et/ou le ou les paramètres de configuration modifiés sont configurés pour comprendre au moins l'un parmi : un paramètre de transmission de message et un paramètre de transmission de transport.

5. Dispositif sans fil (130) selon la revendication 4, dans lequel au moins l'un parmi :
a. le paramètre de transmission de message est configuré pour être un paramètre CoAP, et
b. le paramètre de transmission de transport est configuré pour être une valeur de minuterie Datagram Transport Layer Security, DTLS.

6. Dispositif sans fil (130) selon l'une quelconque des revendications 3 à 5, dans lequel le ou les paramètres de configuration et/ou le ou les paramètres de configuration modifiés sont configurés pour comprendre au moins l'un parmi : CoAP-CONFIG*, instance_number, ACK _TIMEOUT, ACK _RANDOM_FACTOR, MAX_RETRANSMIT, NSTART, DEFAULT_LEISURE, PROBING_RATE, et DTLS_RETRANSMISSION_TIMER, dans lequel CoAP-CONFIG* comprend des paramètres CoAP qui peuvent être modifiés par le nœud de réseau (110) ;
instance_number est un nombre utilisé pour différencier avec d'autres instances du même objet ;
ACK_TIMEOUT désigne la durée pendant laquelle le nœud de réseau (110) attend l'exécution du redémarrage ; et
ACK _RANDOM_FACTOR, MAX_RETRANSMIT, NSTART, DEFAULT_LEISURE, PROBING_RATE, et
DTLS_RETRANSMISSION_TIMER font référence à des valeurs spécifiées dans CoAP.

7. Dispositif sans fil (130) selon l'une quelconque des revendications 3 à 6, dans lequel l'objet de configuration est en outre configuré pour comprendre un ou plusieurs paramètres de configuration à partir d'une spécification LwM2M, présentée en tant qu'une ou plusieurs liaisons d'objets, à un ou plusieurs paramètres de configuration existants dans un ou plusieurs autres objets de configuration dans le dispositif sans fil (130).

8. Dispositif sans fil (130) selon la revendication 7, dans lequel la ou les liaisons d'objets sont configurées pour être un ou plusieurs paramètres de configuration existants configurés pour comprendre au moins l'un parmi : Lifetime OL, Default Min Period OL, Default Max Period OL et Disable Timeout OL, dans lequel Lifetime OL, Default Min Period OL et Default Max Period OL font référence à une valeur spécifiée dans LwM2M.

9. Dispositif sans fil (130) selon l'une quelconque des revendications 3 à 8, dans lequel l'envoi et la réception sont configurés pour être réalisés au cours d'une procédure du dispositif sans fil (130) dans le réseau de communication (10) choisie parmi : amorçage, gestion de dispositif, activation de service et mise à jour de micrologiciel.

10. Dispositif sans fil (130) selon l'une quelconque des revendications 3 à 9, dans lequel l'envoi et la réception sont configurés pour être réalisés à l'aide d'un protocole Lightweight Machine to Machine, LwM2M.

11. Dispositif sans fil (130) selon l'une quelconque des revendications 3 à 10, dans lequel le réseau de communication (10) est configuré pour fonctionner sur une technologie d'Internet des objets.

12. Dispositif sans fil (130) selon l'une quelconque des revendications 3 à 11, dans lequel le dispositif sans fil (130) est configuré pour être un dispositif contraint.

13. Nœud de réseau (110) configuré pour fonctionner dans un réseau de communication (10), le nœud de réseau (110) étant en outre configuré pour :
- recevoir une première indication depuis un dispositif sans fil (130), la première indication étant configurée pour indiquer une capacité à reconfigurer un ou plusieurs paramètres de configuration sur la base d'une instruction émanant du nœud de réseau (110),
- envoyer une deuxième indication au dispositif sans fil (130) en réponse à la réception de la première indication, la deuxième indication étant configurée pour indiquer une demande de fournir le ou les paramètres de configuration,
- recevoir une troisième indication depuis le dispositif sans fil (130) configurée pour fonctionner dans le réseau de communication (10), la troisième indication comprenant un objet de configuration dans Constrained Application Protocol, CoAP, l'objet de configuration étant configuré pour comprendre le ou les paramètres de configuration du dispositif sans fil (130) dans le réseau de communication (10),
- envoyer une quatrième indication au dispositif sans fil (130), la quatrième indication comprenant une première instruction de configurer le dispositif sans fil (130) pour utiliser au moins un paramètre de configuration modifié parmi le ou les paramètres de configuration, le ou les paramètres de configuration modifiés étant configurés pour être adaptés à une ou plusieurs politiques du réseau de communication (10) pour le dispositif sans fil (130).

14. Programme informatique (507, 608), comprenant des instructions qui, lorsqu'elles sont exécutées sur au moins un processeur (503, 604), amènent le ou les processeur (503, 604) à réaliser le procédé selon la revendication 1 ou 2.

15. Support de stockage lisible par ordinateur (508, 609), sur lequel est stocké un programme informatique (507, 608) comprenant des instructions qui, lorsqu'elles sont exécutées sur au moins un processeur (503, 604), amènent le ou les processeur (503, 604) à réaliser le procédé selon la revendication 1 ou 2.
